# EUROPEAN PATENT APPLICATION

(11) **EP 4 432 743 A1**
(43) Date of publication of application: **18.09.2024**
(21) Application number: 22906606.3
(22) Date of filing: 14.12.2022
(51) Int. Cl.: H04W 56/00, H04W 36/08

(54) **METHOD FOR SYNCHRONIZATION ADVANCING AND COMMUNICATION APPARATUS**

(30) Priority: 15.12.2021 CN 202111534059
(71) Applicant: Huawei Technologies Co., Ltd., Shenzhen, Guangdong 518129 (CN)
(72) Inventor: HU, Jinna, Shenzhen, Guangdong 518129 (CN); MA, Chuan, Shenzhen, Guangdong 518129 (CN); WU, Yaqi, Shenzhen, Guangdong 518129 (CN); WU, Hengheng, Shenzhen, Guangdong 518129 (CN); ZOU, Zhiqiang, Shenzhen, Guangdong 518129 (CN); MA, Ni, Shenzhen, Guangdong 518129 (CN)
(74) Representative: Maiwald GmbH
(86) International application number: PCT/CN2022/138987
(87) International publication number: WO 2023/109861

(57) **Abstract**

Embodiments of this application disclose a synchronization advancing method and a communication apparatus. The method may include: A terminal device receives a first message from a first access network device, where the first message is used by the terminal device to obtain a timing advance TA of the terminal device in a target cell, and the target cell is not a cell currently accessed by the terminal device. The terminal device sends a second message to the first access network device, where the second message indicates that the terminal device has completed configuration of the target cell. In embodiments of this application, the terminal device receives the first message from the first access network device. The terminal device has completed downlink synchronization before obtaining configuration information of the target cell, and the terminal device may obtain the TA of the terminal device in the target cell when obtaining the configuration information of the target cell, to complete uplink synchronization in advance, thereby reducing a cell handover delay.

## Description

This application claims priority to Chinese Patent Application No. 202111534059.5, filed with the China National Intellectual Property Administration on December 15, 2021 and entitled "SYNCHRONIZATION ADVANCING METHOD AND COMMUNICATION APPARATUS", which is incorporated herein by reference in its entirety.

### TECHNICAL FIELD

This application relates to the field of computers, and in particular, to a synchronization advancing method and a communication apparatus.

### BACKGROUND

As energy consumption of base stations keeps increasing, the energy consumption of base stations has become one of main reasons for high operating costs of operators. How to reduce the energy consumption of base stations becomes an urgent problem to be resolved. A common energy saving method is to enable a cell to sleep during no-load or light-load. Based on antenna surface multiplexing of an antenna, a coverage area of a cell can be extended. This greatly reduces impact of sleeping behavior of another cell on coverage and increases a sleep opportunity when the cell is lightly and moderately loaded.

In a multi-cell scenario, when network load is heavy, all cells run normally to ensure capacity. When the network load is light, coverage areas of some of the cells may be extended and the other of the cells may sleep, to implement energy saving without affecting user experience.

In the background of cell sleep, to avoid affecting communication experience of a user equipment (user equipment, UE), coverage of another cell needs to be extended in advance, and the sleep is performed after cell handover is completed. A currently used cell handover procedure has a high delay. When the delay of the cell handover procedure is high, a period of time in which coverage of an original cell overlaps with coverage of a target cell is long, and signal interference increases. In addition, a cell sleep speed is affected, and energy saving is affected. Therefore, a solution for reducing a cell handover delay is researched.

### SUMMARY

Embodiments of this application disclose a synchronization advancing method and a communication apparatus. A terminal device completes uplink and downlink synchronization before a network device initiates cell handover to the terminal device, so that a cell handover delay can be reduced.

According to a first aspect, an embodiment of this application provides a synchronization advancing method. The method includes: A terminal device receives a first message from a first access network device. The first message is used by the terminal device to obtain a timing advance (timing advance, TA) of the terminal device in a target cell, and the target cell is not a cell currently accessed by the terminal device. The terminal device sends a second message to the first access network device. The second message indicates that the terminal device has completed configuration of the target cell. The first access network device may be an entity corresponding to the cell currently accessed by the terminal device. The target cell may be a cell currently to be accessed by the terminal device. It may be understood that the terminal device is to be handed over from the currently accessed cell to the target cell.

In this embodiment of this application, the terminal device receives the first message from the first access network device. The terminal device may obtain the TA of the terminal device in the target cell based on the first message, and further complete uplink synchronization in advance. This can reduce a cell handover delay.

In a possible implementation, the first message is a radio resource control (radio resource control, RRC) reconfiguration message, and the second message is an RRC reconfiguration complete message.

In this implementation, the RRC reconfiguration (RRCReconfiguration) message is used by the terminal device to obtain the TA of the terminal device in the target cell. The terminal device may complete, based on the first message, the uplink synchronization before accessing the target cell, that is, complete the uplink synchronization in advance. In addition, the first message is RRCReconfiguration, which may be better compatible with existing signaling. The terminal device may send the RRC reconfiguration complete message (RRCReconfigurationComplete) to the first access network device, to notify the first access network device that the terminal device has completed the configuration of the target cell.

In a possible implementation, the first message includes the TA of the terminal device in the target cell and/or configuration information of the target cell.

In this implementation, the terminal device may quickly and accurately obtain the TA in the target cell and/or the configuration information of the target cell based on the first message.

In a possible implementation, before the terminal device receives the first message from the first access network device, the method further includes: The terminal device receives first indication information and second indication information from the first access network device. The first indication information indicates the terminal device to perform a synchronization-related operation on the target cell, and the second indication information indicates a time-frequency resource available for the terminal device to send an uplink signal to the target cell.

In this implementation, the terminal device receives the first indication information and the second indication information from the first access network device, so as to perform the synchronization-related operation on the target cell in time, and obtain the time-frequency resource available to send the uplink signal to the target cell.

In a possible implementation, the first indication information and the second indication information are carried in a same message.

In this implementation, the first indication information and the second indication information are carried in the same message, so that signaling overheads can be reduced.

In a possible implementation, the first indication information and the second indication information are carried in a same RRC reconfiguration message.

In a possible implementation, the first indication information and the second indication information are carried in different messages.

In this implementation, the first indication information and the second indication information are carried in different messages. Because the first indication information and the second indication information have different functions and formats, the first indication information and the second indication information are more suitable to be carried in different messages.

In a possible implementation, the first indication information is carried in any one of an RRC reconfiguration message, a media access control (media access control, MAC) control element (control element, CE), and downlink control information (downlink control information, DCI). The second indication information is carried in any one of the RRC reconfiguration message, the MAC CE, and the DCI.

In this implementation, the first indication information is carried in any one of the RRC reconfiguration message, the MAC CE, and the DCI. The second indication information is carried in any one of the RRC reconfiguration message, the MAC CE, and the DCI. The first indication information and the second indication information are carried in existing signaling, thereby reducing impact on an existing communication system.

In a possible implementation, before the terminal device receives the first indication information, the target cell has completed synchronization beam coverage.

In this implementation, before the terminal device receives the first indication information, the target cell has completed the synchronization beam coverage.

In a possible implementation, before the terminal device receives the first indication information, the target cell has completed synchronization beam coverage, and coverage of the target cell has not been completed.

Before the terminal device receives the first indication information, the target cell has completed the synchronization beam coverage. Therefore, when the coverage of the target cell has not been completed, the terminal device may perform a synchronization-related operation in advance, to reduce a cell handover delay.

In a possible implementation, after the terminal device receives the first indication information and the second indication information from the first access network device, and before the terminal device receives the first message from the first access network device, the method further includes: The terminal device detects a synchronization signal of the target cell to complete downlink synchronization. The terminal device sends a first uplink signal to the target cell based on the second indication information. The first uplink signal is used to determine the TA of the terminal device in the target cell.

In this implementation, before receiving the first message from the first access network device, the terminal device detects the synchronization signal of the target cell to complete the downlink synchronization, and sends the first uplink signal to the target cell, so that uplink and downlink synchronization can be completed before the target cell is configured, thereby reducing a cell handover delay.

In a possible implementation, that the terminal device sends the first uplink signal to the target cell based on the second indication information includes: The terminal device sends the first uplink signal to the target cell by using the time-frequency resource indicated by the second indication information.

In this implementation, the terminal device sends the first uplink signal to the target cell by using the time-frequency resource indicated by the second indication information, so that the target cell accurately receives the first uplink signal. In this application, any operation performed by the target cell may be understood as an operation performed by an entity corresponding to the target cell. The target cell is a cell to be configured (or a cell to be accessed) by the terminal device.

In a possible implementation, before the terminal device sends the second message to the first access network device, the method further includes: The terminal device obtains the TA of the terminal device in the target cell based on the first message, and completes the configuration of the target cell.

That the terminal device completes the configuration of the target cell may be considered as that the terminal device is handed over to the target cell. In this implementation, before sending the second message to the first access network device, the terminal device obtains the TA in the target cell, and completes the configuration of the target cell, so that uplink synchronization can be completed more quickly, thereby reducing a cell handover delay.

In a possible implementation, the first message further includes third indication information, and the third indication information indicates a condition for handing over the terminal device to the target cell.

In this implementation, the third indication information indicates the condition for handing over the terminal device to the target cell. When the terminal device needs to be handed over, a network does not need to send handover signaling to the terminal for triggering, so that signaling overheads can be reduced.

In a possible implementation, the method further includes: The terminal evaluates the condition. When the condition is met, the terminal device performs cell handover based on the TA of the terminal device in the target cell.

In this implementation, when the condition is met, the terminal device performs the cell handover based on the TA of the terminal device in the target cell, so that the cell handover can be performed in time, and signaling overheads can be reduced.

In a possible implementation, the condition includes one or more of the following: signal quality that is of the cell currently accessed by the terminal device and that is measured by the terminal device is less than a first threshold; and signal quality that is of the target cell and that is measured by the terminal device is greater than or equal to a second threshold.

In this implementation, whether the cell handover needs to be performed may be properly determined.

In a possible implementation, a case in which the condition is met includes: receiving information indicating that the condition is met.

According to a second aspect, an embodiment of this application provides another synchronization advancing method. The method includes: A terminal device receives an RRC reconfiguration message from a first access network device. The RRC reconfiguration message is used by the terminal device to obtain a TA of the terminal device in a target cell, and the target cell is not a cell currently accessed by the terminal device. The terminal device sends an RRC reconfiguration complete message to the first access network device. The RRC reconfiguration complete message indicates that the terminal device has completed configuration of the target cell.

In this embodiment of this application, the terminal device receives the RRC reconfiguration message from the first access network device. The terminal device may obtain the TA of the terminal device in the target cell based on the RRC reconfiguration message, and may complete uplink synchronization in advance. This reduces a cell handover delay.

In a possible implementation, the RRC reconfiguration message includes the TA of the terminal device in the target cell and/or configuration information of the target cell.

In this implementation, the terminal device may accurately and quickly obtain the TA of the terminal device in the target cell and/or the configuration information of the target cell based on the RRC reconfiguration message.

According to a third aspect, an embodiment of this application provides another communication method. The method includes: A terminal device receives first indication information from a first access network device. The first indication information indicates the terminal device to perform a synchronization-related operation. The terminal device performs the synchronization-related operation on a target cell based on the first indication information. The terminal device receives a first message from the first access network device after completing the synchronization-related operation. The first message is used by the terminal device to obtain a TA in the target cell.

In this implementation, after completing the synchronization-related operation, the terminal device receives the first message from the first access network device. In other words, the terminal device has completed the synchronization-related operation before obtaining configuration information of the target cell. Therefore, the terminal device completes configuration of the target cell (or implements cell handover), so that a delay caused by uplink and downlink synchronization can be reduced.

In a possible implementation, that the terminal device performs the synchronization-related operation on the target cell based on the first indication information includes: The terminal device detects a synchronization signal of the target cell to complete downlink synchronization.

In this implementation, before receiving the first message from the first access network device, the terminal device detects the synchronization signal of the target cell to complete the downlink synchronization, so that the downlink synchronization can be completed before the first message is received, thereby reducing a cell handover delay.

In a possible implementation, before the terminal device receives the first message from the first access network device, the method further includes: The terminal device receives second indication information from the first access network device. The second indication information indicates a time-frequency resource available for the terminal device to send an uplink signal to the target cell. The terminal device sends a first uplink signal to the target cell based on the second indication information. The first uplink signal is used to determine the TA of the terminal device in the target cell.

In this implementation, before receiving the first message from the first access network device, the terminal device sends the first uplink signal to the target cell. Uplink synchronization is completed before the target cell is configured, so that a cell handover delay can be reduced.

In a possible implementation, the first indication information and the second indication information are carried in a same message.

In this implementation, the first indication information and the second indication information are carried in the same message, so that signaling overheads can be reduced.

In a possible implementation, the first indication information and the second indication information are carried in a same RRC reconfiguration message.

In a possible implementation, the first indication information and the second indication information are carried in different messages.

In this implementation, the first indication information and the second indication information are carried in different messages. Because the first indication information and the second indication information have different functions and formats, the first indication information and the second indication information are more suitable to be carried in different messages.

In a possible implementation, the first indication information is carried in any one of an RRC reconfiguration message, a MAC CE, and DCI. The second indication information is carried in any one of the RRC reconfiguration message, the MAC CE, and the DCI.

In this implementation, the first indication information is carried in any one of the RRC reconfiguration message, the MAC CE, and the DCI. The second indication information is carried in any one of the RRC reconfiguration message, the MAC CE, and the DCI. The first indication information is carried in existing signaling, thereby reducing impact on an existing communication system.

In a possible implementation, the first message includes the TA of the terminal device in the target cell and/or configuration information of the target cell.

In this implementation, the terminal device may accurately and quickly obtain the TA of the terminal device in the target cell and/or the configuration information of the target cell based on the first message.

According to a fourth aspect, an embodiment of this application provides another synchronization advancing method, including: A first access network device sends a first message to a terminal device. The first message is used by the terminal device to obtain a TA of the terminal device in a target cell, and the target cell is not a cell currently accessed by the terminal device. The first access network device receives a second message from the terminal device. The second message indicates that the terminal device has completed configuration of the target cell. The first access network device may be an entity corresponding to the cell currently accessed by the terminal device.

In this embodiment of this application, the first message is used by the terminal device to obtain the TA of the terminal device in the target cell. The first access network device sends the first message to the terminal device, so that the terminal device can obtain the TA of the terminal device in the target cell, and the terminal device completes uplink synchronization in advance. This reduces a cell handover delay.

In a possible implementation, the first message is a radio resource control RRC reconfiguration message, and the second message is an RRC reconfiguration complete message.

In this implementation, the RRC reconfiguration message is used by the terminal device to obtain the TA of the terminal device in the target cell. The terminal device may complete, based on the first message, the uplink synchronization before accessing the target cell, that is, complete the uplink synchronization in advance. In addition, the first message is RRCReconfiguration, which may be better compatible with existing signaling. The terminal device may send the RRC reconfiguration complete message (RRCReconfigurationComplete) to the first access network device, to notify the first access network device that the terminal device has completed the configuration of the target cell.

In a possible implementation, the first message includes the TA of the terminal device in the target cell and/or configuration information of the target cell.

In this implementation, the terminal device may quickly and accurately obtain the TA in the target cell and/or the configuration information of the target cell based on the first message.

In a possible implementation, before the first access network device sends the first message to the terminal device, the method further includes: The first access network device sends first indication information and second indication information to the terminal device. The first indication information indicates the terminal device to perform a synchronization-related operation, and the second indication information indicates a time-frequency resource available for the terminal device to send an uplink signal to the target cell.

In this implementation, the first access network device sends the first indication information and the second indication information to the terminal device, to indicate the terminal device to perform the synchronization-related operation in time before configuring the target cell.

In a possible implementation, the first indication information and the second indication information are carried in a same message.

In this implementation, the first indication information and the second indication information are carried in the same message, so that signaling overheads can be reduced.

In a possible implementation, the first indication information and the second indication information are carried in a same RRC reconfiguration message.

In a possible implementation, the first indication information and the second indication information are carried in different messages.

In this implementation, the first indication information and the second indication information are carried in different messages. Because the first indication information and the second indication information have different functions and formats, the first indication information and the second indication information are more suitable to be carried in different messages.

In a possible implementation, the first indication information is carried in any one of an RRC reconfiguration message, a MAC CE, and DCI. The second indication information is carried in any one of the RRC reconfiguration message, the MAC CE, and the DCI.

In this implementation, the first indication information is carried in any one of the RRC reconfiguration message, the MAC CE, and the DCI. The second indication information is carried in any one of the RRC reconfiguration message, the MAC CE, and the DCI. The first indication information is carried in existing signaling, thereby reducing impact on an existing communication system.

In a possible implementation, that the first access network device sends the first indication information to the terminal device includes: After the target cell has completed synchronization beam coverage, the first access network device sends the first indication information to the terminal device.

In this implementation, after the target cell has completed the synchronization beam coverage, the first access network device sends the first indication information to the terminal device. The first indication information can be sent to the terminal device in time, and it can be ensured that the terminal device can implement downlink synchronization after receiving the first indication information.

In a possible implementation, after the first access network device sends the first indication information to the terminal device, and before the first access network device sends the first message to the terminal device, the method further includes: The first access network device receives a first uplink signal from the terminal device. The first uplink signal is used to obtain the TA of the terminal device in the target cell, and the first access network device is an entity corresponding to the target cell. Alternatively, the first access network device receives a third message from a second access network device. The third message includes the TA of the terminal device in the target cell, the second access network device is an entity corresponding to the target cell, and the first access network device and the second access network device are different entities.

In this implementation, before the first access network device sends the first message to the terminal device, the first access network device receives the first uplink signal from the terminal device or receives the third message from the second access network device, to obtain the TA of the terminal device in the target cell. In this way, the first access network device may include, in the first message, information used to obtain the TA of the terminal device in the target cell, so that when obtaining the configuration information of the target cell, the terminal device can obtain information about the TA of the terminal device in the target cell.

In a possible implementation, the first message includes third indication information, and the third indication information indicates a condition for handing over the terminal device to the target cell.

In this implementation, the third indication information indicates the condition for handing over the terminal device to the target cell. When the terminal device needs to be handed over, a network does not need to send handover signaling to the terminal for triggering, so that signaling overheads can be reduced.

In a possible implementation, after the first message is sent to the terminal device, the method further includes: before the cell currently accessed by the terminal device sleeps or recovers coverage, sending, to the terminal device, information indicating that the condition is met.

In this implementation, the terminal device can perform cell handover in time.

According to a fifth aspect, an embodiment of this application provides another synchronization advancing method, including: A first access network device sends an RRC reconfiguration message to a terminal device. The RRC reconfiguration message is used by the terminal device to obtain a TA of the terminal device in a target cell, and the target cell is not a cell currently accessed by the terminal device. The first access network device receives an RRC reconfiguration complete message from the terminal device. The RRC reconfiguration message indicates that the terminal device has completed configuration of the target cell. The first access network device may be an entity corresponding to the cell currently accessed by the terminal device.

In this embodiment of this application, the RRC reconfiguration message is used by the terminal device to obtain the TA of the terminal device in the target cell. The first access network device sends the RRC reconfiguration message to the terminal device, so that the terminal device can obtain the TA of the terminal device in the target cell, and the terminal device completes uplink synchronization in advance. This reduces a cell handover delay.

In a possible implementation, the RRC reconfiguration message includes the TA of the terminal device in the target cell and/or configuration information of the target cell.

In this implementation, the terminal device may quickly and accurately obtain the TA of the terminal device in the target cell and/or the configuration information of the target cell based on the RRC reconfiguration message.

According to a sixth aspect, an embodiment of this application provides another synchronization advancing method, including: After sending first indication information to a terminal device, a first access network device sends a first message to the terminal device. The first indication information indicates the terminal device to perform a synchronization-related operation on a target cell, and the first message is used by the terminal device to obtain configuration information of the target cell.

In this embodiment of this application, after sending the first indication information to the terminal device, the first access network device sends the first message to the terminal device. In this way, before receiving the first message, the terminal device may perform the synchronization-related operation. This reduces a delay caused by uplink and downlink synchronization during cell handover.

In a possible implementation, before the first message is sent to the terminal device, the method further includes: The first access network device sends second indication information to the terminal device. The second indication information indicates a time-frequency resource available for the terminal device to send an uplink signal to the target cell.

In this implementation, before sending the first message to the terminal device, the first access network device sends the second indication information to the terminal device, so that before receiving the first message, the terminal device obtains, based on the second indication information, the time-frequency resource available for the terminal device to send the uplink signal to the target cell.

In a possible implementation, the first indication information and the second indication information are carried in a same message.

In this implementation, the first indication information and the second indication information are carried in the same message, so that signaling overheads can be reduced.

In a possible implementation, the first indication information and the second indication information are carried in a same RRC reconfiguration message.

In a possible implementation, the first indication information and the second indication information are carried in different messages.

In this implementation, the first indication information and the second indication information are carried in different messages. Because the first indication information and the second indication information have different functions and formats, the first indication information and the second indication information are more suitable to be carried in different messages.

In a possible implementation, the first indication information is carried in any one of an RRC reconfiguration message, a MAC CE, and DCI. The second indication information is carried in any one of the RRC reconfiguration message, the MAC CE, and the DCI.

In this implementation, the first indication information is carried in any one of the RRC reconfiguration message, the MAC CE, and the DCI. The second indication information is carried in any one of the RRC reconfiguration message, the MAC CE, and the DCI. The first indication information is carried in existing signaling, thereby reducing impact on an existing communication system.

In a possible implementation, after the first access network device sends the first indication information to the terminal device, and before the first access network device sends the first message to the terminal device, the method further includes: The first access network device receives a first uplink signal from the terminal device. The first uplink signal is used to obtain the TA of the terminal device in the target cell, and the first access network device is an entity corresponding to the target cell. Alternatively, the first access network device receives a third message from a second access network device. The third message includes the TA of the terminal device in the target cell, the second access network device is an entity corresponding to the target cell, and the first access network device and the second access network device are different entities.

In this implementation, before the first access network device sends the first message to the terminal device, the first access network device receives the first uplink signal from the terminal device or receives the third message from the second access network device, to obtain the TA of the terminal device in the target cell. In this way, the first access network device may include, in the first message, information used to obtain the TA of the terminal device in the target cell, so that when obtaining the configuration information of the target cell, the terminal device can obtain information about the TA of the terminal device in the target cell.

In a possible implementation, the first message is further used by the terminal device to obtain the TA of the terminal device in the target cell.

In this implementation, the first message is further used by the terminal device to obtain the TA of the terminal device in the target cell. Before accessing the target cell, the terminal device obtains the TA of the terminal device in the target cell based on the first message, so that the terminal device implements uplink synchronization on the target cell in advance, to reduce a cell handover delay.

In a possible implementation, the first message includes the TA of the terminal device in the target cell and/or configuration information of the target cell.

In this implementation, the terminal device may directly obtain the TA of the terminal device in the target cell and/or the configuration information of the target cell based on the first message.

According to a seventh aspect, an embodiment of this application provides another synchronization advancing method, including: A second access network device sends a third message to a first access network device. The third message is used by the first access network device to obtain a TA of a terminal device in a target cell, the target cell is not a cell currently accessed by the terminal device, the second access network device is an entity corresponding to the target cell, and the first access network device is an entity corresponding to the cell currently accessed by the terminal device. The second access network device and the second access network device are different entities.

In this embodiment of this application, the second access network device sends the third message to the first access network device, so that the first access network device can obtain the TA of the terminal device in the target cell and further complete uplink synchronization of the terminal device in the target cell in advance. This reduces a cell handover delay.

In a possible implementation, before the second access network device sends the third message to the first access network device, the method further includes: The second access network device receives a first uplink signal from the terminal device. The second access network device determines the TA of the terminal device in the target cell based on the first uplink signal.

In this implementation, the second access network device determines the TA of the terminal device in the target cell based on the first uplink signal, so that uplink synchronization on the target cell is completed in advance, thereby reducing a cell handover delay.

In a possible implementation, the third message includes the TA of the terminal device in the target cell and/or configuration information of the target cell.

In this implementation, the second access network device sends the third message to the first access network device, so that the first access network device can directly obtain the TA of the terminal device in the target cell and/or the configuration information of the target cell.

In a possible implementation, the method further includes: broadening partial or entire beam coverage of the target cell; and after the beam coverage of the target cell is broadened, sending, to the terminal device, information indicating that the terminal device meets a condition for handing over the terminal device to the target cell.

In this implementation, the terminal device can perform cell handover in time.

In a possible implementation, the method further includes: after running of the target cell is completely recovered, sending, to the terminal device, information indicating that the terminal device meets a condition for handing over the terminal device to the target cell.

In this implementation, the terminal device can perform cell handover in time.

According to an eighth aspect, an embodiment of this application provides a communication apparatus. The communication apparatus has a function of implementing actions in the method embodiment in the first aspect. The function may be implemented by hardware, or may be implemented by hardware executing corresponding software. The hardware or the software includes one or more modules or units that correspond to the foregoing function. In a possible implementation, the communication apparatus includes a transceiver module. The transceiver module is configured to receive a first message from a first access network device. The first message is used by a terminal device (namely, a communication apparatus in a ninth aspect) to obtain a TA of the terminal device in a target cell, and the target cell is not a cell currently accessed by the terminal device. The transceiver module is further configured to send a second message to the first access network device. The second message indicates that the terminal device has completed configuration of the target cell.

In a possible implementation, the first message is an RRC reconfiguration message, and the second message is an RRC reconfiguration complete message.

In a possible implementation, the first message includes the TA of the terminal device in the target cell and/or configuration information of the target cell.

In a possible implementation, the transceiver module is further configured to: before receiving the first message from the first access network device, receive first indication information and second indication information from the first access network device. The first indication information indicates the terminal device to perform a synchronization-related operation, and the second indication information indicates a time-frequency resource available for the terminal device to send an uplink signal to the target cell.

In a possible implementation, the first indication information and the second indication information are carried in a same message.

In a possible implementation, the first indication information and the second indication information are carried in a same RRC reconfiguration message.

In a possible implementation, the first indication information and the second indication information are carried in different messages.

In a possible implementation, the first indication information is carried in any one of an RRC reconfiguration message, a MAC CE, and DCI. The second indication information is carried in any one of the RRC reconfiguration message, the MAC CE, and the DCI.

In a possible implementation, before the terminal device receives the first indication information, the target cell has completed synchronization beam coverage.

In a possible implementation, the communication apparatus further includes a processing module. The processing module is configured to: before the transceiver module receives the first message from the first access network device, detect a synchronization signal of the target cell to complete downlink synchronization. The processing module is further configured to control, based on the second indication information, the transceiver module to send a first uplink signal to the target cell. The first uplink signal is used to determine the TA of the terminal device in the target cell.

In a possible implementation, the processing module is specifically configured to control the transceiver module to send the first uplink signal to the target cell by using the time-frequency resource indicated by the second indication information.

In a possible implementation, the processing module is further configured to: before the transceiver module sends the second message to the first access network device, complete the configuration of the target cell based on the first message, and obtain the TA of the terminal device in the target cell.

In a possible implementation, the first message further includes third indication information, and the third indication information indicates a condition for handing over the terminal device to the target cell.

In a possible implementation, the processing module is further configured to: evaluate the condition; and when the condition is met, perform cell handover based on the TA of the terminal device in the target cell.

In a possible implementation, the condition includes one or more of the following: signal quality that is of the cell currently accessed by the terminal device and that is measured by the terminal device is less than a first threshold; and signal quality that is of the target cell and that is measured by the terminal device is greater than or equal to a second threshold.

In a possible implementation, a case in which the condition is met includes: receiving information indicating that the condition is met.

For technical effects brought by various possible implementations of the eighth aspect, refer to the descriptions of the technical effects of the first aspect or the possible implementations of the first aspect.

According to a ninth aspect, an embodiment of this application provides a communication apparatus. The communication apparatus has a function of implementing actions in the method embodiment in the second aspect. The function may be implemented by hardware, or may be implemented by hardware executing corresponding software. The hardware or the software includes one or more modules or units that correspond to the foregoing function. In a possible implementation, the communication apparatus includes a transceiver module. The transceiver module is configured to receive an RRC reconfiguration message from a first access network device. The RRC reconfiguration message is used by a terminal device (namely, a communication apparatus in a tenth aspect) to obtain a TA of the terminal device in a target cell, and the target cell is not a cell currently accessed by the terminal device. The transceiver module is further configured to send an RRC reconfiguration complete message to the first access network device. The RRC reconfiguration complete message indicates that the terminal device has completed configuration of the target cell.

In a possible implementation, the RRC reconfiguration message includes the TA of the terminal device in the target cell and/or configuration information of the target cell.

For technical effects brought by various possible implementations of the ninth aspect, refer to the descriptions of the technical effects of the second aspect or the possible implementations of the second aspect.

According to a tenth aspect, an embodiment of this application provides a communication apparatus. The communication apparatus has a function of implementing actions in the method embodiment in the third aspect. The function may be implemented by hardware, or may be implemented by hardware executing corresponding software. The hardware or the software includes one or more modules or units that correspond to the foregoing function. In a possible implementation, the communication apparatus includes a transceiver module and a processing module. The transceiver module is configured to receive first indication information from a first access network device. The first indication information indicates a terminal device (namely, a communication apparatus in an eleventh aspect) to perform a synchronization-related operation. The processing module is configured to perform the synchronization-related operation on a target cell based on the first indication information. The transceiver module is further configured to receive a first message from the first access network device after the processing module completes the synchronization-related operation. The first message is used by the terminal device to obtain configuration information of the target cell.

In a possible implementation, the processing module is specifically configured to detect a synchronization signal of the target cell to complete downlink synchronization.

In a possible implementation, the transceiver module is further configured to: before receiving the first message from the first access network device, receive second indication information from the first access network device. The second indication information indicates a time-frequency resource available for the terminal device to send an uplink signal to the target cell. The processing module is further configured to control, based on the second indication information, the transceiver module to send a first uplink signal to the target cell. The first uplink signal is used to determine a TA of the terminal device in the target cell.

In a possible implementation, the first indication information and the second indication information are carried in a same message.

In a possible implementation, the first indication information and the second indication information are carried in a same RRC reconfiguration message.

In a possible implementation, the first indication information and the second indication information are carried in different messages.

In a possible implementation, the first indication information is carried in any one of an RRC reconfiguration message, a MAC CE, and DCI. The second indication information is carried in any one of the RRC reconfiguration message, the MAC CE, and the DCI.

In a possible implementation, the first message includes the TA of the terminal device in the target cell and/or the configuration information of the target cell.

For technical effects brought by various possible implementations of the tenth aspect, refer to the descriptions of the technical effects of the third aspect or the possible implementations of the third aspect.

According to an eleventh aspect, an embodiment of this application provides a communication apparatus. The communication apparatus has a function of implementing actions in the method embodiment in the fourth aspect. The function may be implemented by hardware, or may be implemented by hardware executing corresponding software. The hardware or the software includes one or more modules or units that correspond to the foregoing function. In a possible implementation, the communication apparatus includes a transceiver module. The transceiver module is configured to send a first message to a terminal device. The first message is used by the terminal device to obtain a TA of the terminal device in a target cell, and the target cell is not a cell currently accessed by the terminal device. The transceiver module is further configured to receive a second message from the terminal device. The second message indicates that the terminal device has completed configuration of the target cell.

In a possible implementation, the first message is a radio resource control RRC reconfiguration message, and the second message is an RRC reconfiguration complete message.

In a possible implementation, the first message includes the TA of the terminal device in the target cell and/or configuration information of the target cell.

In a possible implementation, the transceiver module is further configured to: before sending the first message to the terminal device, send first indication information and second indication information to the terminal device. The first indication information indicates the terminal device to perform a synchronization-related operation, and the second indication information indicates a time-frequency resource available for the terminal device to send an uplink signal to the target cell.

In a possible implementation, the first indication information and the second indication information are carried in a same message.

In a possible implementation, the first indication information and the second indication information are carried in a same RRC reconfiguration message.

In a possible implementation, the first indication information and the second indication information are carried in different messages.

In a possible implementation, the first indication information is carried in any one of an RRC reconfiguration message, a MAC CE, and DCI. The second indication information is carried in any one of the RRC reconfiguration message, the MAC CE, and the DCI.

In a possible implementation, the transceiver module is specifically configured to: after the target cell has completed synchronization beam coverage, send the first indication information to the terminal device.

In a possible implementation, the transceiver module is further configured to: before sending the first message to the terminal device, receive a first uplink signal from the terminal device. The first uplink signal is used to obtain the TA of the terminal device in the target cell, and the first access network device is an entity corresponding to the target cell. Alternatively, the transceiver module is further configured to: before sending the first message to the terminal device, receive a third message from a second access network device. The third message includes the TA of the terminal device in the target cell, the second access network device is an entity corresponding to the target cell, and the first access network device and the second access network device are different entities.

In a possible implementation, the first message includes third indication information, and the third indication information indicates a condition for handing over the terminal device to the target cell.

In a possible implementation, the transceiver module is further configured to: before the cell currently accessed by the terminal device sleeps or recovers coverage, send, to the terminal device, information indicating that the condition is met.

For technical effects brought by various possible implementations of the eleventh aspect, refer to the descriptions of the technical effects of the fourth aspect or the possible implementations of the fourth aspect.

According to a twelfth aspect, an embodiment of this application provides a communication apparatus. The communication apparatus has a function of implementing actions in the method embodiment in the fifth aspect. The function may be implemented by hardware, or may be implemented by hardware executing corresponding software. The hardware or the software includes one or more modules or units that correspond to the foregoing function. In a possible implementation, the communication apparatus includes a transceiver module. The transceiver module is configured to send an RRC reconfiguration message to a terminal device. The RRC reconfiguration message is used by the terminal device to obtain a TA of the terminal device in a target cell, and the target cell is not a cell currently accessed by the terminal device. The transceiver module is further configured to receive an RRC reconfiguration complete message from the terminal device. The RRC reconfiguration message indicates that the terminal device has completed configuration of the target cell. The first access network device may be an entity corresponding to the cell currently accessed by the terminal device.

In a possible implementation, the RRC reconfiguration message includes the TA of the terminal device in the target cell and/or configuration information of the target cell.

For technical effects brought by various possible implementations of the twelfth aspect, refer to the descriptions of the technical effects of the fifth aspect or the possible implementations of the fifth aspect.

According to a thirteenth aspect, an embodiment of this application provides a communication apparatus. The communication apparatus has a function of implementing actions in the method embodiment in the sixth aspect. The function may be implemented by hardware, or may be implemented by hardware executing corresponding software. The hardware or the software includes one or more modules or units that correspond to the foregoing function. In a possible implementation, the communication apparatus includes a transceiver module. The transceiver module is configured to: after sending first indication information to a terminal device, send a first message to the terminal device. The first indication information indicates the terminal device to perform a synchronization-related operation on a target cell, and the first message is used by the terminal device to obtain configuration information of the target cell.

In a possible implementation, the transceiver module is further configured to: before sending the first message to the terminal device, send second indication information to the terminal device. The second indication information indicates a time-frequency resource available for the terminal device to send an uplink signal to the target cell.

In a possible implementation, the first indication information and the second indication information are carried in a same message.

In a possible implementation, the first indication information and the second indication information are carried in a same RRC reconfiguration message.

In a possible implementation, the first indication information and the second indication information are carried in different messages.

In a possible implementation, the first indication information is carried in any one of an RRC reconfiguration message, a MAC CE, and DCI. The second indication information is carried in any one of the RRC reconfiguration message, the MAC CE, and the DCI.

In a possible implementation, the transceiver module is further configured to: before sending the first message to the terminal device, receive a first uplink signal from the terminal device. The first uplink signal is used to obtain a TA of the terminal device in the target cell, and the first access network device is an entity corresponding to the target cell. Alternatively, the transceiver module is further configured to: before sending the first message to the terminal device, receive a third message from a second access network device. The third message includes a TA of the terminal device in the target cell, the second access network device is an entity corresponding to the target cell, and the first access network device and the second access network device are different entities.

In a possible implementation, the first message is further used by the terminal device to obtain the TA of the terminal device in the target cell.

In a possible implementation, the first message includes the TA of the terminal device in the target cell and/or the configuration information of the target cell.

For technical effects brought by various possible implementations of the thirteenth aspect, refer to the descriptions of the technical effects of the sixth aspect or the possible implementations of the sixth aspect.

According to a fourteenth aspect, an embodiment of this application provides a communication apparatus. The communication apparatus has a function of implementing actions in the method embodiment in the seventh aspect. The function may be implemented by hardware, or may be implemented by hardware executing corresponding software. The hardware or the software includes one or more modules or units that correspond to the foregoing function. In a possible implementation, the communication apparatus includes a transceiver module. The processing module is configured to send a third message to a first access network device. The third message is used by the first access network device to obtain a TA of a terminal device in a target cell, the target cell is not a cell currently accessed by the terminal device, a second access network device (namely, the communication apparatus in the fourteenth aspect) is to an entity corresponding to the target cell, and the first access network device is an entity corresponding to the cell currently accessed by the terminal device.

In a possible implementation, the transceiver module is further configured to receive a first uplink signal from the terminal device. The communication apparatus further includes: a processing module, further configured to determine the TA of the terminal device in the target cell based on the first uplink signal.

In a possible implementation, the transceiver module is further configured to send a first message to the terminal device. The first message is used by the terminal device to obtain configuration information of the target cell and the TA of the terminal device in the target cell.

In a possible implementation, the third message includes the TA of the terminal device in the target cell and/or configuration information of the target cell.

In a possible implementation, the processing module is further configured to broaden partial or entire beam coverage of the target cell. The transceiver module is further configured to: after the beam coverage of the target cell is broadened, send, to the terminal device, information indicating that the terminal device meets a condition for handing over the terminal device to the target cell.

In a possible implementation, the transceiver module is further configured to: after running of the target cell is completely recovered, send, to the terminal device, information indicating that the terminal device meets a condition for handing over the terminal device to the target cell.

For technical effects brought by various possible implementations of the fourteenth aspect, refer to the descriptions of the technical effects of the seventh aspect or the possible implementations of the seventh aspect.

According to a fifteenth aspect, this application provides a communication apparatus. The communication apparatus includes a processor. The processor may be configured to execute computer-executable instructions stored in a memory, so that the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, the method shown in any one of the fifth aspect or the possible implementations of the fifth aspect is performed, the method shown in any one of the sixth aspect or the possible implementations of the sixth aspect is performed, or the method shown in any one of the seventh aspect or the possible implementations of the seventh aspect is performed.

In this embodiment of this application, in a process of performing the foregoing method, a process of sending information in the foregoing method may be understood as a process of outputting information based on an instruction of the processor. When the information is output, the processor outputs the information to a transceiver, so that the transceiver transmits the information. After the information is output by the processor, the information may further need other processing, and then reaches the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving involved in the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in any one of the first aspect or the possible implementations of the first aspect. In a possible implementation, the memory is located outside the communication apparatus. In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive a packet, send a packet, or the like.

According to a sixteenth aspect, this application provides a communication apparatus. The communication apparatus includes a processing circuit and an interface circuit. The interface circuit is configured to obtain data or output data. The processing circuit is configured to perform the corresponding method shown in any one of the first aspect or the possible implementations of the first aspect, the processing circuit is configured to perform the corresponding method shown in any one of the second aspect or the possible implementations of the second aspect, the processing circuit is configured to perform the corresponding method shown in any one of the third aspect or the possible implementations of the third aspect, the processing circuit is configured to perform the corresponding method shown in any one of the fourth aspect or the possible implementations of the fourth aspect, the processing circuit is configured to perform the corresponding method shown in any one of the fifth aspect or the possible implementations of the fifth aspect, the processing circuit is configured to perform the corresponding method shown in any one of the sixth aspect or the possible implementation of the sixth aspects, or the processing circuit is configured to perform the corresponding method shown in any one of the seventh aspect or the possible implementations of the seventh aspect.

According to a seventeenth aspect, this application provides a computer-readable storage medium. The computer-readable storage medium is configured to store a computer program. When the computer program is run on a computer, the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, the method shown in any one of the fifth aspect or the possible implementations of the fifth aspect is performed, the method shown in any one of the sixth aspect or the possible implementations of the sixth aspect is performed, or the method shown in any one of the seventh aspect or the possible implementations of the seventh aspect is performed.

According to an eighteenth aspect, this application provides a computer program product. The computer program product includes a computer program or computer code. When the computer program or the computer code is run on a computer, the method shown in any one of the first aspect or the possible implementations of the first aspect is performed, the method shown in any one of the second aspect or the possible implementations of the second aspect is performed, the method shown in any one of the third aspect or the possible implementations of the third aspect is performed, the method shown in any one of the fourth aspect or the possible implementations of the fourth aspect is performed, the method shown in any one of the fifth aspect or the possible implementations of the fifth aspect is performed, the method shown in any one of the sixth aspect or the possible implementations of the sixth aspect is performed, or the method shown in any one of the seventh aspect or the possible implementations of the seventh aspect is performed.

According to a nineteenth aspect, this application provides a communication system, including the communication apparatus in the possible implementations of the eighth aspect to the tenth aspect, the communication apparatus in the possible implementations of the eleventh aspect to the thirteenth aspect, and the communication apparatus in the possible implementations of the fourteenth aspect.

### BRIEF DESCRIPTION OF DRAWINGS

To describe the technical solutions in embodiments of this application or in the background more clearly, the following briefly describes accompanying drawings for describing embodiments of this application or the background.
FIG. 1A is an example of a cell sleep/recovery scenario according to an embodiment of this application;
FIG. 1B is an example of a secondary carrier cell sleep/recovery scenario according to an embodiment of this application;
FIG. 2 is a flowchart of a synchronization advancing method according to an embodiment of this application;
FIG. 3 is a flowchart of another synchronization advancing method according to an embodiment of this application;
FIG. 4 is a flowchart of another synchronization advancing method according to an embodiment of this application;
FIG. 5 is a flowchart of another synchronization advancing method according to an embodiment of this application;
FIG. 6 is a flowchart of another synchronization advancing method according to an embodiment of this application;
FIG. 7 is a flowchart of another synchronization advancing method according to an embodiment of this application;
FIG. 8 is a flowchart of a cell handover method according to an embodiment of this application;
FIG. 9 is a flowchart of another cell handover method according to an embodiment of this application;
FIG. 10 is a flowchart of a secondary carrier cell handover method according to an embodiment of this application;
FIG. 11 is a flowchart of a secondary carrier cell handover method according to an embodiment of this application;
FIG. 12 is a diagram of a structure of a communication apparatus 1200;
FIG. 13 is a diagram of a structure of another communication apparatus 130 according to an embodiment of this application;
FIG. 14 is a diagram of a structure of another communication apparatus 140 according to an embodiment of this application;
FIG. 15 is a flowchart of another synchronization advancing method according to an embodiment of this application;
FIG. 16 is a flowchart of another synchronization advancing method according to an embodiment of this application; and
FIG. 17 is a flowchart of another synchronization advancing method according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, devices, or the like that include a series of steps or units are not limited to listed steps or units, but instead, optionally further include steps, units, or the like that are not listed, or optionally further include other steps or units inherent to these processes, methods, products, devices, or the like.

"Embodiment" mentioned herein means that a specific feature, structure, or characteristic described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

Terms used in the following embodiments of this application are merely intended to describe specific embodiments, but are not intended to limit this application. As used in the specification of this application and the appended claims, the singular expressions "a", "an", "the", "the foregoing", "such a", and "this" are intended to also include a plural expression unless otherwise clearly indicated in the context. It should be further understood that the term "and/or" used in this application refers to and includes any or all possible combinations of one or more of the listed items. For example, "A and/or B" may represent three cases: Only A exists, only B exists, and both A and B exist, where A and B may be singular or plural. The term "a plurality of" used in this application means two or more.

As described in the background, currently, a solution to reduce a cell handover delay needs to be studied. This application provides a solution that can reduce the cell handover delay. A main principle of the solution that can reduce the cell handover delay provided in this application is as follows: Before a cell completes coverage broadening (or extension) or completely recovers running, a terminal device performs pre-synchronization, so that cell handover can be quickly completed after the cell completes the coverage broadening or completely recovers running. In other words, the terminal device may first complete a part or all of synchronization operations of the terminal device in the cell before the cell completes the coverage broadening or completely recovers running. In this way, a delay caused by uplink and downlink synchronization during cell handover can be reduced.

The following describes a network architecture in this application in detail.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 4th generation (4th generation, 4G) communication system, a non-terrestrial communication network (non-terrestrial network, NTN) system, a 5th generation (5th generation, 5G) communication system, or a new radio (new radio, NR) communication system, and another future communication system such as 6G. The technical solutions provided in this application may be used to resolve a problem that a cell handover delay is long in a multi-carrier multi-cell network scenario or a single-carrier multi-cell network scenario. The following describes the technical solutions provided in this application by using a cell sleep/recovery scenario in a 5G communication system as an example.

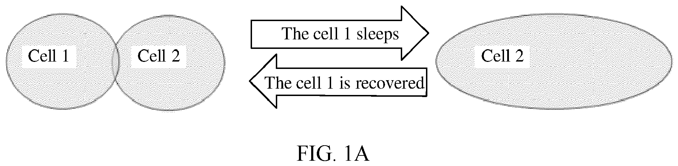

FIG. 1A is an example of a cell sleep/recovery scenario according to an embodiment of this application. As shown in FIG. 1A, it is considered that a UE has accessed a cell 1. When the cell 1 meets a sleep condition, the cell 1 needs to be enabled to sleep, and a cell 2 needs to be broadened. Therefore, the UE needs to perform cell handover and is handed over from the cell 1 to the cell 2. As shown in FIG. 1A, it is considered that the UE has accessed a broadened cell 2 (the cell 2 that completes broadening). When the cell 1 meets a recovery condition, coverage of the cell 2 needs to be recovered, and the cell 1 needs to be restarted. Therefore, the UE needs to perform cell handover and is handed over from the cell 2 to the cell 1. The cell 1 and the cell 2 may correspond to a same entity (or are co-sited), or may correspond to different entities (or are not co-sited).

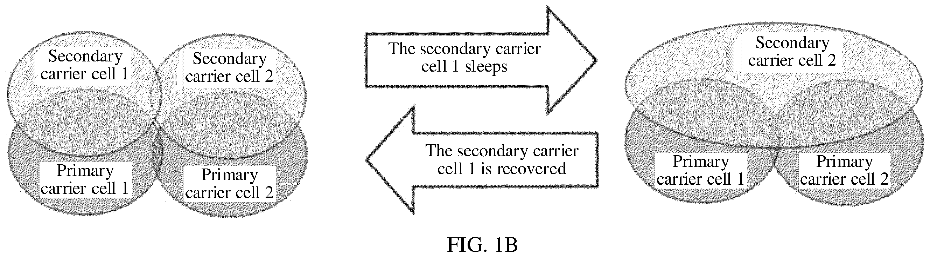

FIG. 1B is an example of a secondary carrier cell sleep/recovery scenario according to an embodiment of this application. As shown in FIG. 1B, it is considered that a UE has accessed a primary carrier cell 1 and a secondary carrier cell 1. When the secondary carrier cell 1 meets a sleep condition, the secondary carrier cell 1 needs to be enabled to sleep, and a secondary carrier cell 2 needs to be broadened. Therefore, the UE needs to perform cell handover and is handed over from the secondary carrier cell 1 to the secondary carrier cell 2. As shown in FIG. 1B, it is considered that the UE has accessed the primary carrier cell 1 and a broadened secondary carrier cell 2 (the secondary carrier cell 2 that completes broadening). When the secondary carrier cell 1 meets a recovery condition, coverage of the secondary carrier cell 2 needs to be recovered, and the secondary carrier cell 1 needs to be restarted. Therefore, the UE needs to perform cell handover and is handed over from the secondary carrier cell 2 to the secondary carrier cell 1. The primary carrier cell 1 and the secondary carrier cell 2 may correspond to a same entity (or are co-sited), or may correspond to different entities (or are not co-sited).

In embodiments of this application, all entities corresponding to a primary carrier cell, a secondary carrier cell, and a single-carrier cell may be access network devices. The access network device may be any device that has a wireless transceiver function and that can communicate with the user equipment, for example, a radio access network (radio access network, RAN) node that enables the user equipment to access a wireless network. Currently, some examples of the RAN node include a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), or the like. In this application, an example in which a base station is used as the access network device is used for description.

The user equipment (user equipment, UE) is a device having a wireless transceiver function. The user equipment may communicate with one or more core network (core network, CN) devices (or may also be referred to as core devices) through an access network device (or may also be referred to as an access device) in a radio access network (radio access network, RAN). The user equipment may be deployed on land, and include an indoor user equipment, an outdoor user equipment, a handheld user equipment, or a vehicle-mounted user equipment; may be deployed on a water surface (for example, on a ship); or may be deployed in the air (for example, on an aircraft, a balloon, or a satellite). In embodiments of this application, the UE may also be referred to as a terminal device, and may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal in transportation safety (transportation safety), a wireless terminal device in a smart city (smart city), a wireless terminal in a smart home (smart home), or the like. Optionally, the user equipment may be a handheld device, a vehicle-mounted device, or a wearable device that has a wireless communication function, a terminal in an internet of things or an internet of vehicles, a terminal in any form in a 5G network or a future network, or the like. This is not limited in this application. The access network device may be any device that has a wireless transceiver function and that can communicate with the user equipment, for example, a radio access network (radio access network, RAN) node that enables the user equipment to access a wireless network. Currently, some examples of the RAN node include a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), integrated access and backhaul (integrated access and backhaul, IAB), or the like.

To describe the technical solutions provided in embodiments of this application more clearly, the following first describes some technical features in embodiments of this application.

### Cell handover

When a location of a UE changes or quality of service of a cell changes, the UE needs to be handed over to another cell to ensure quality of service in a connected mode. This process is referred to as cell handover.

The following describes a secondary carrier cell handover procedure in a multi-carrier multi-cell environment. It should be noted that, in a multi-carrier configuration, control information of a secondary carrier cell is sent by a primary carrier cell in which a UE is located. An example of the secondary carrier cell handover procedure in the multi-carrier multi-cell environment is as follows.
1: The primary carrier cell transfers measurement configuration information to the UE through an RRCReconfiguration message.
2: The UE replies with an RRCReconfigurationComplete message, performs related measurement on the secondary carrier cell based on the measurement configuration information, and generates a measurement result.
3: The UE reports the measurement result to the primary carrier cell through a measurement report.
4: The primary carrier cell selects a new proper secondary carrier cell and sends an RRCReconfiguration message to the UE.
   The RRCReconfiguration message includes information, such as configuration information and a dedicated preamble (preamble), of the new secondary carrier cell (referred to as a target secondary carrier cell in the following) selected by the primary carrier cell.
5: The UE scans a synchronization signal block (synchronization signal block, SSB) beam of the target secondary carrier cell to perform operations such as downlink synchronization and obtaining system information.
6: The UE includes the dedicated preamble in the target secondary carrier cell to initiate a non-contention-based random access (random access) message.
   The random access (random access) message may be referred to as a message 1 (MSG 1).
7: The target secondary carrier cell replies with a random access response (random access response) message.
   The random access response message includes a TA command. The random access response (random access response) message may be referred to as a message 2 (MSG 1). The TA command is used to implement time synchronization on a base station side, namely, uplink synchronization.
8: The UE performs downlink synchronization and replies with RRCReconfigurationComplete.

The RRCReconfigurationComplete indicates that the UE completes cell handover, that is, the UE is handed over to the target secondary carrier cell.

### Uplink synchronization

Distances between different UEs in a cell (a primary carrier cell, a secondary carrier cell, or a single-carrier cell) and a base station are different. Therefore, moments at which uplink signals of different UEs arrive at the base station are also different. Such difference causes interference between the uplink signals of the different UEs in the cell. To reduce such interference, moments at which the uplink signals of the different UEs in the cell arrive at the base station should be aligned as much as possible. An uplink "timing advance (timing advance, TA)" mechanism is usually used to achieve time synchronization on the base station side, namely, uplink synchronization.

A principle of the TAis as follows: Atiming advance (namely, a TA value) is configured for the UE, and the UE adjusts uplink timing based on the configured TA value when sending uplink data. TA values are properly configured for the different UEs, so that the moments at which the uplink signals of the different UEs arrive at the base station may be approximately the same.

The base station may calculate the TA value of the UE by measuring the uplink signal, such as a preamble signal (preamble) or an uplink sounding reference signal (sounding reference signal, SRS), sent by the UE. The base station sends a timing advance command (timing advance command, TAC) to the UE, to notify the UE of the TA value. The TAC may be carried in a MAC CE.

### Downlink synchronization

The downlink synchronization is synchronization on a UE side, that is, the UE obtains timing, frequency, and the like of a base station. The UE implements the downlink synchronization by receiving a synchronization signal sent by the base station. A 5G synchronization signal may include a primary synchronization signal (primary synchronization signal, PSS) and a secondary synchronization signal (secondary synchronization signal, SSS), and is carried in a synchronization signal block (synchronization signal block, SSB). A cell usually periodically sends an SSB, and the UE searches for and receives the SSB to obtain the downlink synchronization.

According to a synchronization advancing method provided in embodiments of this application, a cell handover delay can be reduced. With reference to the accompanying drawings, the following describes the synchronization advancing method provided in embodiments of this application.

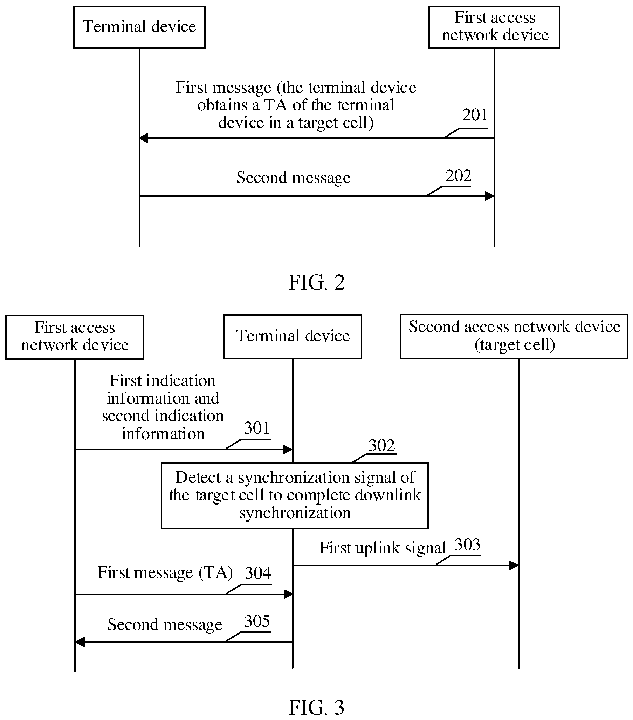

FIG. 2 is a flowchart of a synchronization advancing method according to an embodiment of this application. As shown in FIG. 2, the method includes the following steps.

201: A terminal device receives a first message from a first access network device.

The first message is used by the terminal device to obtain a TA of the terminal device in a target cell. In a possible implementation, the first message includes the TA of the terminal device in the target cell and an identifier of the target cell. The first message may further include configuration information of the target cell. In a possible implementation, the first message is a radio resource control RRC reconfiguration message, namely, an RRCReconfiguration message.

The first access network device may be an entity corresponding to a cell currently accessed by the terminal device. In this application, a state of a cell (for example, the target cell or another cell) may be classified into four types: A first type is a normal working state, a second type is a sleep state, a third type is an extended coverage state, and a fourth type is an intermediate state. When the cell is in the normal working state, the cell runs normally (coverage of the cell is coverage that is not broadened), for example, the cell 2 (on the left) in FIG. 1A and the secondary carrier cell 2 (on the left) in FIG. 1B. When the cell is in the sleep state, the cell sleeps. The extended coverage state of the cell refers to a state in which the cell completes broadening (or completes extension of a coverage area), for example, the cell 2 (on the right) in FIG. 1A and the secondary carrier cell 2 (on the right) in FIG. 1B. The intermediate state of the cell includes a state in which the cell is switched from the sleep state to the normal working state, and a state in which the cell is switched from the normal working state to the extended coverage state.

The target cell may be a cell to be accessed by the terminal device. It may be understood that the terminal device is to be handed over from the currently accessed cell to the target cell. For example, the terminal device has accessed a cell 1. The cell 1 is to enter the sleep state, and a cell 2 is broadened (that is, a coverage area of the cell 2 is extended). The terminal device needs to perform cell handover and is handed over from the cell 1 to the cell 2. The cell 2 is a target cell, and the cell 1 is a cell currently accessed by the terminal device. For another example, a cell 1 is in the sleep state, and a cell 2 is in the extended coverage state. A UE has accessed the cell 2. The cell 2 is to be recovered (extension is canceled), and running of the cell 1 is recovered (restarted). The UE needs to perform cell handover and is handed over from the cell 2 to the cell 1. The cell 1 is a target cell, and the cell 2 is a cell currently accessed by the terminal device. For another example, the terminal device has accessed a primary carrier cell 1 and a secondary carrier cell 1. The secondary carrier cell 1 is to enter the sleep state, and a secondary carrier cell 2 is broadened (that is, a coverage area of the secondary carrier cell 2 is extended). The terminal device needs to perform cell handover and is handed over from the secondary carrier cell 1 to the secondary carrier cell 2. The secondary carrier cell 2 is a target cell, and the secondary carrier cell 1 is a secondary carrier cell currently accessed by the terminal device. For another example, a primary carrier cell 1 and a primary carrier cell 2 are in the normal working state, a secondary carrier cell 1 is in the sleep state, and a secondary carrier cell 2 is in the extended coverage state. A UE has accessed the primary carrier cell 1 and the secondary carrier cell 2. The secondary carrier cell 2 is to be recovered (extension is canceled), and running of the secondary carrier cell 1 is recovered (restarted). The UE needs to perform cell handover and is handed over from the secondary carrier cell 2 to the secondary carrier cell 1. The secondary carrier cell 1 is a target cell, and the secondary carrier cell 2 is a secondary carrier cell currently accessed by the terminal device.

202: The terminal device sends a second message to the first access network device.

The second message indicates that the terminal device has completed configuration of the target cell. In a possible implementation, the second message is an RRC reconfiguration complete message, namely, an RRCReconfigurationComplete message.

In this embodiment of this application, the terminal device receives the first message from the first access network device. The terminal device may obtain the TA of the terminal device in the target cell based on the first message, and complete uplink synchronization in advance. This can reduce a secondary carrier cell handover delay.

FIG. 3 is a flowchart of another synchronization advancing method according to an embodiment of this application. A method procedure in FIG. 3 is a possible implementation of the method described in FIG. 2. As shown in FIG. 3, the method procedure includes the following steps.

301: The terminal device receives a first indication message and second indication information from the first access network device.

The first indication information indicates the terminal device to perform a synchronization-related operation, and the second indication information indicates a time-frequency resource available for the terminal device to send an uplink signal to the target cell. In this application, the synchronization-related operation includes uplink synchronization and/or downlink synchronization. The first access network device is the entity corresponding to the cell currently accessed by the terminal device.

Before the terminal device receives the first indication information, the target cell has completed synchronization beam coverage. In this way, the terminal device can implement the synchronization-related operation, for example, downlink synchronization, only after receiving the first indication information.

In a possible implementation, the first indication message and the second indication information are carried in a same message, for example, an RRC reconfiguration message or another message. In this implementation, the first indication information and the second indication information are carried in the same message, so that signaling overheads can be reduced.

In a possible implementation, the first indication message and the second indication information are carried in different messages. Because the first indication information and the second indication information have different functions and formats, the first indication information and the second indication information are more suitable to be carried in different messages. For example, the first indication information is carried in any one of an RRC reconfiguration message, a MAC CE, and DCI. The second indication information is carried in any one of the RRC reconfiguration message, the MAC CE, and the DCI.

302: The terminal device detects a synchronization signal of the target cell to complete downlink synchronization.

The synchronization signal of the target cell may be an SSB, or may be another signal. This is not limited in this application. After receiving the first indication message, the terminal device performs step 302. It may be understood that, after receiving the first indication message, the terminal device learns, based on the first indication information, that the synchronization-related operation needs to be performed, and therefore performs step 302.

A possible implementation of step 302 is as follows: The terminal device searches for and receives the synchronization signal sent by the target cell, to complete the downlink synchronization. For example, the target cell periodically sends an SSB, and the UE searches for and receives the SSB to obtain the downlink synchronization.

303: The terminal device sends a first uplink signal to the target cell based on the second indication information.

The first uplink signal is used to determine the TA of the terminal device in the target cell. The first uplink signal is a known uplink signal (for example, a preamble or an SRS) that may be used to calculate the TA. Sending the first uplink signal to the target cell may be sending the first uplink signal to a second access network device corresponding to the target cell. The second access network device is an entity corresponding to the target cell.

A possible implementation of step 303 is as follows: The terminal device sends the first uplink signal to the target cell based on the second indication information and by using the time-frequency resource available for the terminal device to send the uplink signal to the target cell.

304: The terminal device receives the first message from the first access network device.

For step 304, refer to step 201.

305: The terminal device sends the second message to the first access network device.

For step 305, refer to step 202.

In this embodiment of this application, before receiving the first message from the first access network device, the terminal device detects the synchronization signal of the target cell to complete the downlink synchronization, and sends the first uplink signal to the target cell, so that uplink and downlink synchronization can be completed before cell handover is performed, thereby reducing a cell handover delay.

In this embodiment of this application, before receiving the first message from the first access network device, the terminal device detects the synchronization signal of the target cell to complete the downlink synchronization, so that the downlink synchronization can be completed before cell handover is performed, thereby reducing a cell handover delay.

The solution that can reduce the cell handover delay provided in this application needs to be implemented through cooperation between the terminal device, the entity (the first access network device) corresponding to the cell currently accessed by the terminal device, and the entity (the second access network device) corresponding to the target cell. FIG. 2 to FIG. 4 describe the procedure of the synchronization advancing method performed by the terminal device. The following describes a procedure of a synchronization advancing method performed by the first access network device corresponding to the cell currently accessed by the terminal device.

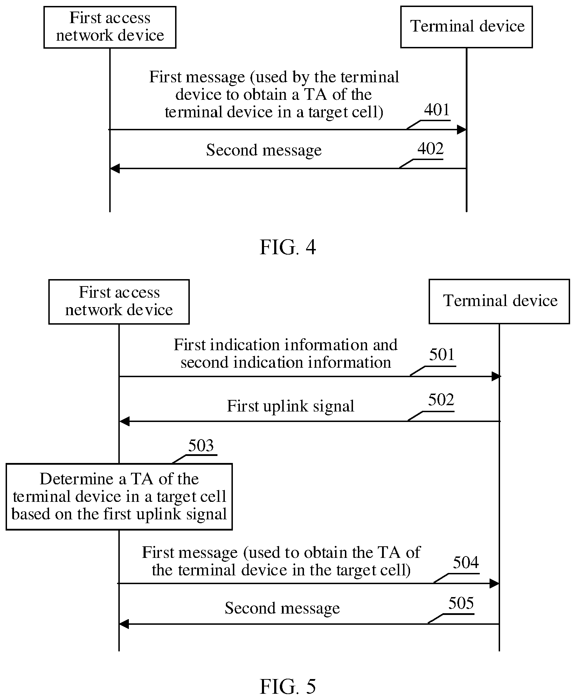

FIG. 4 is a flowchart of another synchronization advancing method according to an embodiment of this application. As shown in FIG. 4, a method procedure includes the following steps.

401: A first access network device sends a first message to a terminal device.

The first message is used by the terminal device to obtain a TA of the terminal device in a target cell. In a possible implementation, the first message includes the TA of the terminal device in the target cell and an identifier of the target cell. The first message may further include configuration information of the target cell. In a possible implementation, the first message is a radio resource control RRC reconfiguration message. For step 401, refer to step 201.

402: The first access network device receives a second message from the terminal device.

The second message indicates that the terminal device has completed configuration of the target cell. For step 402, refer to step 202.

In this embodiment of this application, the first message is used by the terminal device to obtain the TA of the terminal device in the target cell. The first access network device sends the first message to the terminal device, so that the terminal device can obtain the TA of the terminal device in the target cell before accessing the target cell. Therefore, uplink synchronization can be completed in advance, thereby reducing a cell handover delay.

FIG. 5 is a flowchart of another synchronization advancing method according to an embodiment of this application. A method procedure in FIG. 5 is a possible implementation of the method described in FIG. 4. As shown in FIG. 5, the method procedure includes the following steps.

501: The first access network device sends first indication information and second indication information to the terminal device.

The first indication information indicates the terminal device to perform a synchronization-related operation, and the second indication information indicates a time-frequency resource available for the terminal device to send an uplink signal to the target cell. The first access network device is an entity corresponding to a cell currently accessed by the terminal device. For step 501, refer to step 301.

502: The first access network device receives a first uplink signal from the terminal device.

The first uplink signal is used to obtain the TA of the terminal device in the target cell. The first access network device is the entity corresponding to the cell currently accessed by the terminal device, and is an entity corresponding to the target cell to be accessed by the terminal device. It should be understood that the cell currently accessed by the terminal device and the target cell correspond to a same entity (that is, are co-sited).

503: The first access network device determines the TA of the terminal device in the target cell based on the first uplink signal.

Step 502 and step 503 describe a manner in which the first access network device obtains the TA of the terminal device in the target cell when the first access network device is the entity corresponding to the cell currently accessed by the terminal device and the entity corresponding to the target cell to be accessed by the terminal device.

When the first access network device is not the entity corresponding to the target cell to be accessed the terminal device, step 502 and step 503 may be replaced with the following: The first access network device receives a third message from a second access network device. The third message includes the TA of the terminal device in the target cell. The first access network device obtains the TA of the terminal device in the target cell based on the third message. The second access network device is an entity corresponding to the target cell, and the first access network device and the second access network device are different entities. In other words, when the cell currently accessed by the terminal device and the target cell are not co-sited, a site (namely, the second access network device) in which the target cell is located sends the third message (may be referred to as an assistance handover message) to a site (namely, the first access network device) in which the cell currently accessed by the terminal device is located. The message includes the TA of the UE in the target cell.

504: The first access network device sends the first message to the terminal device.

For step 504, refer to step 401.

505: The first access network device receives the second message from the terminal device.

For step 505, refer to step 402.

In this embodiment of this application, the first access network device sends the first indication information and the second indication information to the terminal device, to indicate the terminal device to perform the synchronization-related operation in time before configuring the target cell. Before the first access network device sends the first message to the terminal device, the first access network device receives the first uplink signal from the terminal device or receives the third message from the second access network device, to obtain the TA of the terminal device in the target cell. In this way, the first access network device may include, in the first message, information used to obtain the TA of the terminal device in the target cell, so that when obtaining the configuration information of the target cell, the terminal device can obtain information about the TA of the terminal device in the target cell.

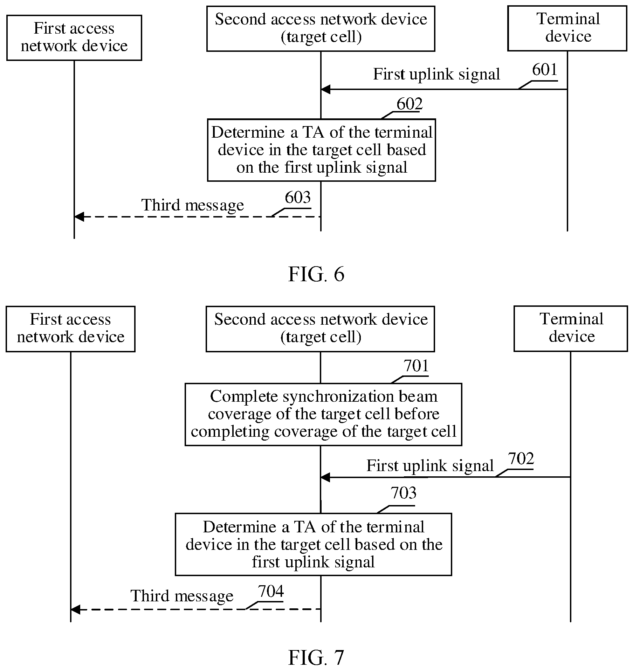

FIG. 6 is a flowchart of another synchronization advancing method according to an embodiment of this application. A method procedure in FIG. 6 is implemented by a second access network device corresponding to a target cell. As shown in FIG. 6, the method procedure includes the following steps.

601: The second access network device receives a first uplink signal from a terminal device.

A possible implementation of step 601 is as follows: Before completing coverage of the target cell, the second access network device receives the first uplink signal from the terminal device. That the second access network device completes the coverage of the target cell may be that the second access network device adjusts the target cell from a sleep state to a normal working state, or may be that the second access network device adjusts the target cell from the normal working state to an extended coverage state. It may be understood that, after the second access network device completes the coverage of the target cell, the target cell is in the normal working state or the extended coverage state.

602: The second access network device determines a TA of the terminal device in the target cell based on the first uplink signal.

603: The second access network device sends a third message to a first access network device.

The third message is used by the first access network device to obtain the TA of the terminal device in the target cell. In a possible implementation, the third message includes the TA of the terminal device in the target cell and configuration information of the target cell.

Step 603 is optional. It should be understood that when the second access network device is an entity corresponding to the target cell to be accessed by the terminal device, and is not an entity corresponding to a cell currently accessed by the terminal device, the second access network device may perform step 603 after performing step 602, so that the first access network device obtains the TA of the terminal device in the target cell. In other words, when a site (the first access network device) in which the cell currently accessed by the terminal device is located and a site (the second access network device) in which the to-be-accessed target cell is located are not co-sited, the second access network device needs to perform step 603 after performing step 602.

When the second access network device is the entity corresponding to the target cell to be accessed by the terminal device, and is the entity corresponding to the cell currently accessed by the terminal device, the second access network device does not need to perform step 603 after performing step 602. Because the second access network device and the first access network device are a same entity (that is, are co-sited), the second access network device does not need to send the third message to the first access network device.

A possible implementation of step 603 is as follows: Before completing the coverage of the target cell, the second access network device sends the third message to the first access network device. In this implementation, before the second access network device completes the coverage of the target cell, the first access network device can obtain the TA of the terminal device in the target cell, to implement uplink synchronization in advance.

In this embodiment of this application, the second access network device sends the third message to the first access network device, so that the first access network device obtains the TA of the terminal device in the target cell, to implement the uplink synchronization in advance.

FIG. 7 is a flowchart of another synchronization advancing method according to an embodiment of this application. A method procedure in FIG. 7 is implemented by a second access network device corresponding to a target cell. As shown in FIG. 7, the method procedure includes the following steps.

701: Before completing coverage of the target cell, the second access network device completes synchronization beam coverage of the target cell.

The second access network device is an entity corresponding to the target cell to be accessed by a terminal device. That the second access network device completes the coverage of the target cell may be that the second access network device adjusts the target cell from a sleep state to a normal working state, or may be that the second access network device adjusts the target cell from the normal working state to an extended coverage state. Before completing the coverage of the target cell (for example, the target cell enters the extended coverage state), the second access network device needs to complete the synchronization beam (for example, an SSB) coverage and another operation.

In a possible implementation, the second access network device may first extend (broaden) synchronization beam coverage of the target cell, to complete the synchronization beam coverage of the target cell before completing the coverage of the target cell. In other words, before the target cell enters the extended coverage state, the second access network device first completes the synchronization beam coverage of the target cell. In this way, an uplink synchronization operation and a downlink synchronization operation can be performed in advance. In other words, a synchronization-related operation is performed.

In a possible implementation, the second access network device may first implement synchronization beam coverage of the target cell, to complete the synchronization beam coverage of the target cell before completing the coverage of the target cell. In other words, before the target cell enters the working state, the second access network device first completes the synchronization beam coverage of the target cell. In this way, an uplink synchronization operation and a downlink synchronization operation can be performed in advance. In other words, a synchronization-related operation is performed.

702: Before completing the coverage of the target cell, the second access network device receives a first uplink signal from the terminal device.

The first uplink signal is used to obtain a TA of the terminal device in the target cell.

703: The second access network device determines the TA of the terminal device in the target cell based on the first uplink signal.

704: The second access network device sends a third message to a first access network device.

The third message is used by the first access network device to obtain the TA of the terminal device in the target cell. In a possible implementation, the third message includes the TA of the terminal device in the target cell and configuration information of the target cell.

Step 704 is optional. It should be understood that when the second access network device is an entity corresponding to the target cell to be accessed by the terminal device, and is not an entity corresponding to a cell currently accessed by the terminal device, the second access network device may perform step 704 after performing step 703, so that the first access network device obtains the TA of the terminal device in the target cell. In other words, when a site (the first access network device) in which the cell currently accessed by the terminal device is located and a site (the second access network device) in which the to-be-accessed target cell is located are not co-sited, the second access network device needs to perform step 704 after performing step 703.

When the second access network device is an entity corresponding to the target cell to be accessed by the terminal device, and is an entity corresponding to a cell currently accessed by the terminal device, the second access network device does not need to perform step 704 after performing step 703. Because the second access network device and the first access network device are a same entity (that is, are co-sited), the second access network device does not need to send the third message to the first access network device. When the second access network device is the entity corresponding to the target cell to be accessed by the terminal device, and is the entity corresponding to the cell currently accessed by the terminal device, after the second access network device performs step 703, the second access network device may send a first message to the terminal device. The first message is used by the terminal device to obtain the TA of the terminal device in the target cell.

In this embodiment of this application, before completing the coverage of the target cell, the second access network device receives the first uplink signal from the terminal device, so that uplink synchronization on the target cell can be completed in advance, thereby reducing a cell handover delay. Completing the uplink synchronization on the target cell in advance may be understood as performing a part or all of operations of implementing the uplink synchronization by the terminal device before the target cell enters the extended coverage state.

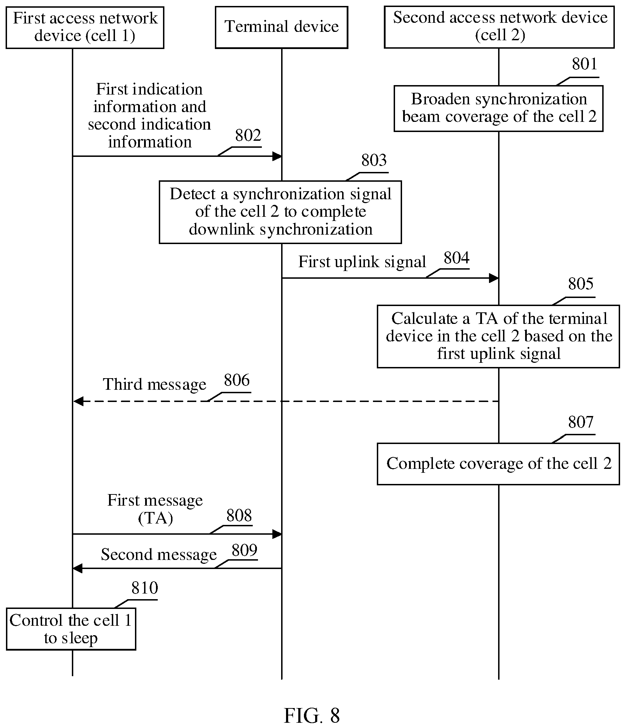

The following describes, with reference to a cell handover scenario when a cell sleeps, application of the synchronization advancing method provided in embodiments of this application to cell handover. FIG. 8 is a flowchart of a cell handover method according to an embodiment of this application. FIG. 1A is an example of a cell handover scenario to which a method procedure in FIG. 8 is applicable. The example of the cell handover scenario to which the method procedure in FIG. 8 is applicable is as follows: Both a cell 1 and a cell 2 are in a normal running mode (namely, a normal working state), a UE has accessed the cell 1, the cell 1 is to sleep, and the cell 2 is to be broadened. Therefore, the UE needs to perform cell handover and is handed over from the cell 1 to the cell 2 (a broadened cell 2). In this embodiment of this application, an entity corresponding to the cell 1 is a first access network device, and an operation performed by the first access network device may be understood as an operation performed by the cell 1. An entity corresponding to the cell 2 is a second access network device, and an operation performed by the second access network device may be understood as an operation performed by the cell 2. The cell 2 may be considered as an example of the foregoing target cell. As shown in FIG. 8, the method procedure may include the following steps.

801: The second access network device broadens synchronization beam coverage of the cell 2.

That the second access network device broadens the synchronization beam coverage of the cell 2 may be understood as follows: Before completing coverage of the cell 2, the second access network device periodically sends a synchronization beam within extended coverage corresponding to the cell 2. In other words, before the cell 2 enters the extended coverage state, the second access network device first broadens the synchronization beam coverage of the cell 2, so that a terminal device performs downlink synchronization. Broadening the synchronization beam coverage of the cell 2 may be considered as broadening the synchronization beam coverage of the cell 2 in advance.

802: The first access network device sends first indication information and second indication information to the terminal device.

For step 802, refer to step 501.

803: The terminal device detects a synchronization signal of the cell 2 to complete the downlink synchronization.

For step 803, refer to step 302.

804: The terminal device sends a first uplink signal to the cell 2 based on the second indication information.

For step 804, refer to step 303.

805: The second access network device calculates a TA of the terminal device in the cell 2 based on the first uplink signal.

806: The second access network device sends a third message to the first access network device.

The third message is used by the first access network device to obtain the TA of the terminal device in the cell 2.

Step 806 is optional. When the second access network device and the first access network device are different entities, that is, when the cell 2 and the cell 1 are not co-sited, the second access network device performs step 806 after performing step 805, so that the first access network device obtains the TA of the terminal device in the cell 2 based on the third message.

When the second access network device and the first access network device are a same entity, that is, when the cell 2 and the cell 1 are co-sited, the second access network device calculates the TA of the terminal device in the cell 2, that is, the first access network device calculates the TA of the terminal device in the cell 2. Therefore, step 806 does not need to be performed.

807: The second access network device completes the coverage of the cell 2.

That the second access network device completes the coverage of the cell 2 may be understood as that the cell 2 has successfully entered the extended coverage state from the normal working state. In a possible implementation, the second access network device may preferentially perform the synchronization beam coverage on the cell 2, to complete the synchronization beam coverage of the cell 2 as soon as possible. Because performing the synchronization beam coverage on the cell 2 by the second access network device may be considered as a part of completing the coverage of the cell 2, a moment at which the second access network device starts to perform step 801 is a moment at which the coverage of the cell 2 starts to be implemented. A moment at which step 802 is completed may be considered as a moment at which the coverage of the cell 2 is completed. In FIG. 1A, the cell 2 on the right is a cell 2 (in the extended coverage state) of which the coverage is completed, and the cell 2 on the left is an original cell 2 (in the normal working state). In a possible implementation, after completing the synchronization beam coverage of the cell 2, the second access network device starts to perform a related operation that needs to be performed to complete the coverage of the cell 2. In a possible implementation, in a process of implementing the synchronization beam coverage of the cell 2, the second access network device concurrently performs the related operation that needs to be performed to complete the coverage of the cell 2.

808: The first access network device sends a first message to the terminal device to initiate cell handover.

The first message may include configuration information of the cell 2, a TA value of the UE in the cell 2, and the like. The first message may be an RRCReconfiguration message.

809: The terminal device completes configuration of the cell 2, and sends a second message to the cell 1.

The second message may be an RRCReconfigurationComplete message used to reply to the first message (the RRCReconfiguration message). In a possible implementation, that the terminal device completes the configuration of the cell 2 may be that the terminal device completes the configuration of the cell 2 based on the configuration information of the cell 2 in the first message. That the terminal device completes the configuration of the cell 2 may be considered as that the terminal device completes handover from the cell 1 to the cell 2.

810: The first access network device controls the cell 1 to sleep.

In this embodiment of this application, the first message received by the terminal device includes the configuration information of the cell 2 and the TA value of the UE in the cell 2. The terminal device may implement uplink synchronization before being handed over to the cell 2. In addition, before the coverage of the cell 2 is completed, the terminal device detects the synchronization signal of the cell 2 to complete the downlink synchronization, and may implement the downlink synchronization before being handed over to the cell 2. It can be learned that, in a cell handover process, the synchronization advancing method provided in this embodiment of this application is used, so that a cell handover delay of a cell is reduced, a period of time in which coverage of an original cell (namely, the cell 1) overlaps with coverage of a target cell (the cell 2) is reduced, and user experience is improved. In addition, a speed at which the cell 1 enters a sleep state is accelerated, and an energy saving effect is improved.

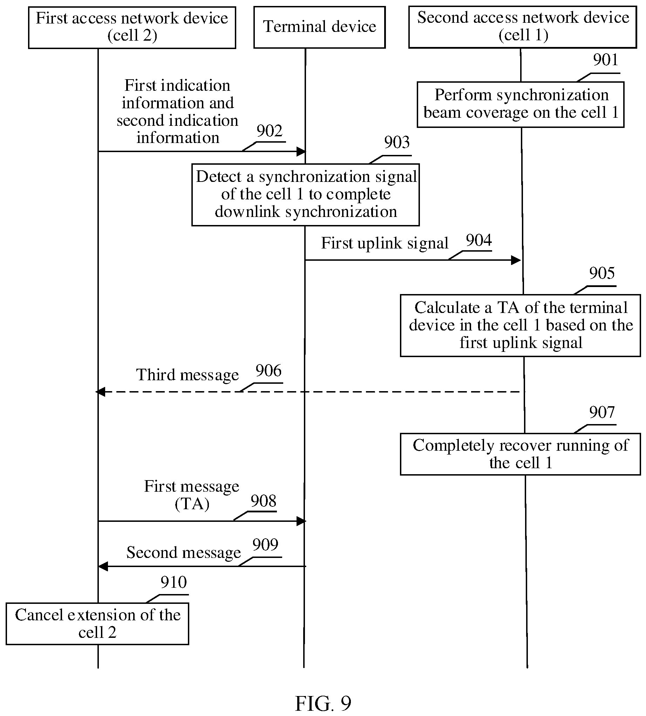

The following describes, with reference to a cell handover scenario when a cell is recovered, application of the synchronization advancing method provided in embodiments of this application to cell handover. FIG. 9 is a flowchart of another cell handover method according to an embodiment of this application. FIG. 1A is an example of a cell handover scenario to which a method procedure in FIG. 9 is applicable. The example of the cell handover scenario to which the method procedure in FIG. 9 is applicable is as follows: A cell 2 is in the extended coverage state (where the cell 2 may be considered as an extended cell 2), a cell 1 is in the sleep state, a UE has accessed the cell 2, the cell 2 is to be recovered (extension is canceled), and running of the cell 1 is to be recovered. That the cell 2 is to be recovered may be understood as that the cell 2 is to be adjusted from the extended coverage state to the normal working state. That running of the cell 1 is to be recovered may be understood as that the cell 1 is to be adjusted from the sleep state to the normal working state. Therefore, the UE needs to perform cell handover and is handed over from the cell 2 to the cell 1 (the cell 1 whose running is recovered). In this embodiment of this application, an entity corresponding to the cell 2 is a first access network device, and an operation performed by the first access network device may be understood as an operation performed by the cell 2. An entity corresponding to the cell 1 is a second access network device, and an operation performed by the second access network device may be understood as an operation performed by the cell 1. The cell 1 may be considered as an example of the foregoing target cell. As shown in FIG. 9, the method procedure may include the following steps.

901: The second access network device performs synchronization beam coverage on the cell 1.

That the second access network device performs the synchronization beam coverage on the cell 2 may be understood as follows: The second access network device periodically sends a synchronization beam within coverage of the cell 1. In other words, before the cell 1 enters the normal working state, the second access network device first periodically sends the synchronization beam, so that a terminal device performs downlink synchronization.

902: The first access network device sends first indication information and second indication information to the terminal device.

For step 902, refer to step 501. The first indication information indicates the terminal device to perform a synchronization-related operation.

903: The terminal device detects a synchronization signal of the cell 1 to complete the downlink synchronization.

For step 903, refer to step 302.

904: The terminal device sends a first uplink signal to the cell 1 based on the second indication information.

For step 904, refer to step 303.

905: The second access network device calculates a TA of the terminal device in the cell 1 based on the first uplink signal.

906: The second access network device sends a third message to the first access network device.

The third message is used by the first access network device to obtain the TA of the terminal device in the cell 1.

Step 906 is optional. When the second access network device and the first access network device are different entities, that is, when the cell 2 and the cell 1 are not co-sited, the second access network device performs step 906 after performing step 905, so that the first access network device obtains the TA of the terminal device in the cell 1 based on the third message.

When the second access network device and the first access network device are a same entity, that is, when the cell 2 and the cell 1 are co-sited, the second access network device calculates the TA of the terminal device in the cell 1, that is, the first access network device calculates the TA of the terminal device in the cell 1. Therefore, step 906 does not need to be performed.

907: The second access network device completely recovers running of the cell 1.

That the second access network device completely recovers running of the cell 1 may be understood as that the cell 1 has successfully entered the normal working state from the sleep working state.

908: The first access network device sends a first message to the terminal device to initiate cell handover.

The first message may include configuration information of the cell 1, a TA value of a UE in the cell 1, and the like. The first message may be an RRCReconfiguration message.

909: The terminal device completes configuration of the cell 1, and sends a second message to the cell 2.

The second message may be an RRCReconfigurationComplete message used to reply to the first message (the RRCReconfiguration message). In a possible implementation, that the terminal device completes the configuration of the cell 1 may be that the terminal device completes the configuration of the cell 1 based on the configuration information of the cell 1 in the first message. That the terminal device completes the configuration of the cell 1 may be considered as that the terminal device completes handover from the cell 2 to the cell 1.

910: The first access network device cancels extension of the cell 2.

That the first access network device cancels the extension of the cell 2 may be that the first access network device adjusts the cell 2 from the extended coverage state to the normal working state.

In this embodiment of this application, the first message received by the terminal device includes the configuration information of the cell 1 and the TA value of the UE in the cell 1. The terminal device may implement uplink synchronization before being handed over to the cell 1. In addition, before running of the cell 1 is completely recovered, the terminal device detects the synchronization signal of the cell 1 to complete the downlink synchronization, and may implement the downlink synchronization before being handed over to the cell 1. It can be learned that, in a cell handover process, the synchronization advancing method provided in this embodiment of this application is used, so that a cell handover delay of a cell is reduced, a period of time in which coverage of an original cell (namely, the cell 2) overlaps with coverage of a target cell (the cell 1) is reduced, and user experience is improved. In addition, a speed at which the cell 1 is recovered from sleeping is accelerated, and impact of cell sleeping on user experience is reduced. With reference to the method procedures in FIG. 8 and FIG. 9, it can be learned that, according to the synchronization advancing method provided in embodiments of this application, a time granularity of a cell sleep operation and a cell recovery operation can be finer, a cell sleep opportunity is increased, and an energy saving effect is enhanced.

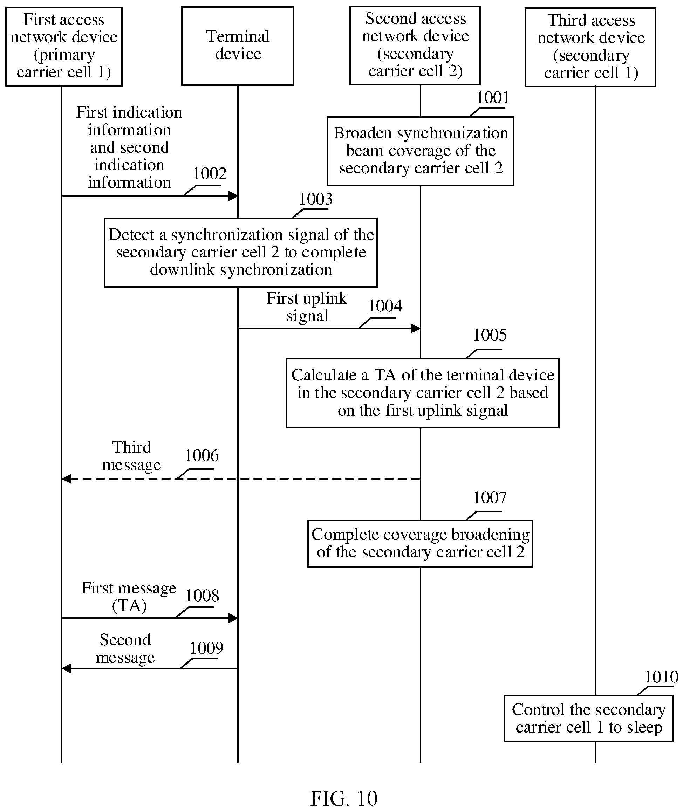

The following describes, with reference to a secondary carrier cell handover scenario when a secondary carrier cell sleeps, application of the synchronization advancing method provided in embodiments of this application to cell handover. FIG. 10 is a flowchart of a secondary carrier cell handover method according to an embodiment of this application. FIG. 1B is an example of a secondary carrier cell handover scenario to which a method procedure in FIG. 10 is applicable. The example of the secondary carrier cell handover scenario to which the method procedure in FIG. 10 is applicable is as follows: A primary carrier cell 1, a primary carrier cell 2, a secondary carrier cell 1, and a secondary carrier cell 2 are all in a normal running mode (namely, a normal working state), a UE has accessed the primary carrier cell 1 and the secondary carrier cell 1, the secondary carrier cell 1 is to sleep, and the secondary carrier cell 2 is to be broadened. Therefore, the UE needs to perform cell handover and is handed over from the secondary carrier cell 1 to the secondary carrier cell 2 (a broadened secondary carrier cell 2). In this embodiment of this application, an entity corresponding to the primary carrier cell 1 is a first access network device, and an operation performed by the first access network device may be understood as an operation performed by the primary carrier cell. An entity corresponding to the secondary carrier cell 2 is a second access network device, and an operation performed by the second access network device may be understood as an operation performed by the secondary carrier cell 2. An entity corresponding to the secondary carrier cell 1 is a third access network device, and an operation performed by the third access network device may be understood as an operation performed by the secondary carrier cell 1. The secondary carrier cell 2 may be considered as an example of the foregoing target cell. As shown in FIG. 10, the method procedure may include the following steps.

1001: The second access network device broadens synchronization beam coverage of the secondary carrier cell 2.

That the second access network device broadens the synchronization beam coverage of the secondary carrier cell 2 may be understood as follows: Before completing coverage of the secondary carrier cell 2, the second access network device periodically sends a synchronization beam within extended coverage corresponding to the secondary carrier cell 2. In other words, before the secondary carrier cell 2 enters the extended coverage state, the second access network device first broadens the synchronization beam coverage of the secondary carrier cell 2, so that a terminal device performs downlink synchronization. Broadening the synchronization beam coverage of the secondary carrier cell 2 may be considered as broadening the synchronization beam coverage of the secondary carrier cell 2 in advance.

1002: The first access network device sends first indication information and second indication information to the terminal device.

For step 1002, refer to step 501. The first indication information indicates the terminal device to perform a synchronization-related operation.

1003: The terminal device detects a synchronization signal of the secondary carrier cell 2 to complete the downlink synchronization.

For step 1003, refer to step 302.

1004: The terminal device sends a first uplink signal to the secondary carrier cell 2 based on the second indication information.

For step 1004, refer to step 303.

1005: The second access network device calculates a TA of the terminal device in the secondary carrier cell 2 based on the first uplink signal.

1006: The second access network device sends a third message to the first access network device.

The third message is used by the first access network device to obtain the TA of the terminal device in the secondary carrier cell 2.

Step 1006 is optional. When the second access network device and the first access network device are different entities, that is, when the secondary carrier cell 2 and the primary carrier cell 1 are not co-sited, the second access network device performs step 1006 after performing step 1005, so that the first access network device obtains the TA of the terminal device in the secondary carrier cell 2 based on the third message.

When the second access network device and the first access network device are a same entity, that is, when the secondary carrier cell 2 and the primary carrier cell 1 are co-sited, the second access network device calculates the TA of the terminal device in the secondary carrier cell 2, that is, the first access network device calculates the TA of the terminal device in the secondary carrier cell 2. Therefore, step 1006 does not need to be performed.

1007: The second access network device completes coverage broadening of the secondary carrier cell 2.

That the second access network device completes the coverage broadening of the secondary carrier cell 2 may be understood as that the secondary carrier cell 2 has successfully entered the extended coverage state from the normal working state.

1008: The first access network device sends a first message to the terminal device to initiate cell handover.

The first message may include configuration information of the secondary carrier cell 2, a TA value of a UE in the secondary carrier cell 2, and the like. The first message may be an RRCReconfiguration message.

1009: The terminal device completes configuration of the secondary carrier cell 2, and sends a second message to the primary carrier cell 1.

The second message may be an RRCReconfigurationComplete message used to reply to the first message (the RRCReconfiguration message). In a possible implementation, that the terminal device completes the configuration of the secondary carrier cell 2 may be that the terminal device completes the configuration of the secondary carrier cell 2 based on the configuration information of the secondary carrier cell 2 in the first message. That the terminal device completes the configuration of the secondary carrier cell 2 may be considered as that the terminal device completes handover from the secondary carrier cell 1 to the secondary carrier cell 2.

1010: The third access network device controls the secondary carrier cell 1 to sleep.

In this embodiment of this application, the first message received by the terminal device includes the configuration information of the secondary carrier cell 2 and the TA value of the UE in the secondary carrier cell 2. The terminal device may implement uplink synchronization before being handed over to the secondary carrier cell 2. In addition, before the secondary carrier cell 2 completes coverage broadening, the terminal device detects the synchronization signal of the secondary carrier cell 2 to complete the downlink synchronization, and may implement the downlink synchronization before being handed over to the secondary carrier cell 2. It can be learned that, in a cell handover process, the synchronization advancing method provided in this embodiment of this application is used, so that a cell handover delay of a secondary carrier cell is reduced, a period of time in which coverage of an original secondary carrier cell (namely, the secondary carrier cell 1) overlaps with coverage of a target secondary carrier cell (the secondary carrier cell 2) is reduced, and user experience is improved. In addition, a speed at which the secondary carrier cell 1 enters a sleep state is accelerated, and an energy saving effect is improved.

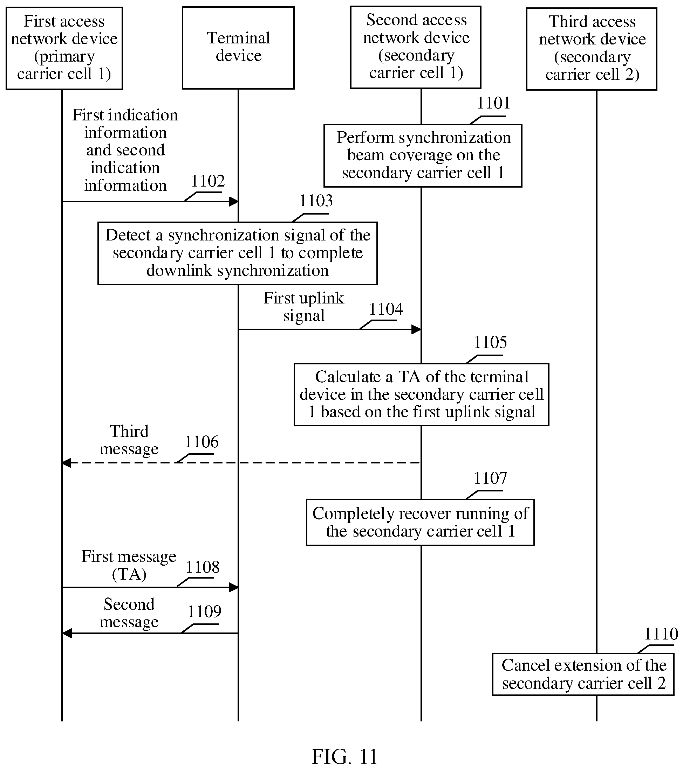

The following describes, with reference to a secondary carrier cell handover scenario when a secondary carrier cell is recovered, application of the synchronization advancing method provided in embodiments of this application to cell handover. FIG. 11 is a flowchart of a secondary carrier cell handover method according to an embodiment of this application. FIG. 1B is an example of a secondary carrier cell handover scenario to which a method procedure in FIG. 11 is applicable. The example of the secondary carrier cell handover scenario to which the method procedure in FIG. 11 is applicable is as follows: A primary carrier cell 1 and a primary carrier cell 2 are in a normal running mode (namely, a normal working state), a secondary carrier cell 1 is in a sleep state, a secondary carrier cell 2 is in an extended coverage state, a UE has accessed the primary carrier cell 1 and the secondary carrier cell 2, the secondary carrier cell 2 is to be recovered (extension is canceled), and running of the secondary carrier cell 1 is to be recovered. That the secondary carrier cell 2 is to be recovered may be understood as that the secondary carrier cell 2 is to be adjusted from the extended coverage state to the normal working state. That running of the secondary carrier cell 1 is to be recovered may be understood as that the secondary carrier cell 1 is to be adjusted from the sleep state to the normal working state. Therefore, the UE needs to perform cell handover and is handed over from the secondary carrier cell 2 to the secondary carrier cell 1 (the secondary carrier cell 1 whose running is recovered). In this embodiment of this application, an entity corresponding to the primary carrier cell 1 is a first access network device, and an operation performed by the first access network device may be understood as an operation performed by the primary carrier cell. An entity corresponding to the secondary carrier cell 1 is a second access network device, and an operation performed by the second access network device may be understood as an operation performed by the secondary carrier cell 1. An entity corresponding to the secondary carrier cell 2 is a third access network device, and an operation performed by the third access network device may be understood as an operation performed by the secondary carrier cell 2. The secondary carrier cell 1 may be considered as an example of the foregoing target cell. As shown in FIG. 11, the method procedure may include the following steps.

1101: The second access network device performs synchronization beam coverage on the secondary carrier cell 1.

That the second access network device performs the synchronization beam coverage on the secondary carrier cell 1 may be understood as follows: The second access network device periodically sends a synchronization beam within coverage of the secondary carrier cell 1. In other words, before the secondary carrier cell 1 enters the normal working state, the second access network device first periodically sends the synchronization beam, so that a terminal device performs downlink synchronization.

1102: The first access network device sends first indication information and second indication information to the terminal device.

For step 1102, refer to step 501. The first indication information indicates the terminal device to perform a synchronization-related operation.

1103: The terminal device detects a synchronization signal of the secondary carrier cell 1 to complete the downlink synchronization.

For step 1103, refer to step 302.

1104: The terminal device sends a first uplink signal to the secondary carrier cell 1 based on the second indication information.

For step 1104, refer to step 303.

1105: The second access network device calculates a TA of the terminal device in the secondary carrier cell 1 based on the first uplink signal.

1106: The second access network device sends a third message to the first access network device.

The third message is used by the first access network device to obtain the TA of the terminal device in the secondary carrier cell 1.

Step 1106 is optional. When the second access network device and the first access network device are different entities, that is, when the secondary carrier cell 1 and the primary carrier cell 1 are not co-sited, the second access network device performs step 1106 after performing step 1105, so that the first access network device obtains the TA of the terminal device in the secondary carrier cell 1 based on the third message.

When the second access network device and the first access network device are a same entity, that is, when the secondary carrier cell 1 and the primary carrier cell 1 are co-sited, the second access network device calculates the TA of the terminal device in the secondary carrier cell 1, that is, the first access network device calculates the TA of the terminal device in the secondary carrier cell 1. Therefore, step 1106 does not need to be performed.

1107: The second access network device completely recovers running of the secondary carrier cell 1.

That the second access network device completely recovers running of the secondary carrier cell 1 may be understood as that the secondary carrier cell 1 has successfully entered the normal working state from the sleep working state.

1108: The first access network device sends a first message to the terminal device to initiate cell handover.

The first message may include configuration information of the secondary carrier cell 1, a TA value of a UE in the secondary carrier cell 1, and the like. The first message may be an RRCReconfiguration message.

1109: The terminal device completes configuration of the secondary carrier cell 1, and sends a second message to the primary carrier cell 1.

The second message may be an RRCReconfigurationComplete message used to reply to the first message (the RRCReconfiguration message). In a possible implementation, that the terminal device completes the configuration of the secondary carrier cell 1 may be that the terminal device completes the configuration of the secondary carrier cell 1 based on the configuration information of the secondary carrier cell 1 in the first message. That the terminal device completes the configuration of the secondary carrier cell 1 may be considered as that the terminal device completes handover from the secondary carrier cell 2 to the secondary carrier cell 1.

1110: The third access network device cancels extension of the secondary carrier cell 2.

That the third access network device cancels extension of the secondary carrier cell 2 may be that the third access network device adjusts the secondary carrier cell 2 from the extended coverage state to the normal working state.

In this embodiment of this application, the first message received by the terminal device includes the configuration information of the secondary carrier cell 1 and the TA value of the UE in the secondary carrier cell 1. The terminal device may implement uplink synchronization before being handed over to the secondary carrier cell 1. In addition, before running of the secondary carrier cell 1 is completely recovered, the terminal device detects the synchronization signal of the secondary carrier cell 1 to complete the downlink synchronization, and may implement the downlink synchronization before being handed over to the secondary carrier cell 1. It can be learned that, in a cell handover process, the synchronization advancing method provided in this embodiment of this application is used, so that a cell handover delay of a secondary carrier cell is reduced, a period of time in which coverage of an original secondary carrier cell (namely, the secondary carrier cell 1) overlaps with coverage of a target secondary carrier cell (the secondary carrier cell 2) is reduced, and user experience is improved. In addition, a speed at which the secondary carrier cell 1 enters a sleep state is accelerated, and an energy saving effect is improved. With reference to the method procedures in FIG. 8 and FIG. 9, it can be learned that, according to the synchronization advancing method provided in embodiments of this application, a time granularity of a secondary carrier cell sleep operation and a secondary carrier cell recovery operation can be finer, a secondary carrier cell sleep opportunity is increased, and an energy saving effect is enhanced.

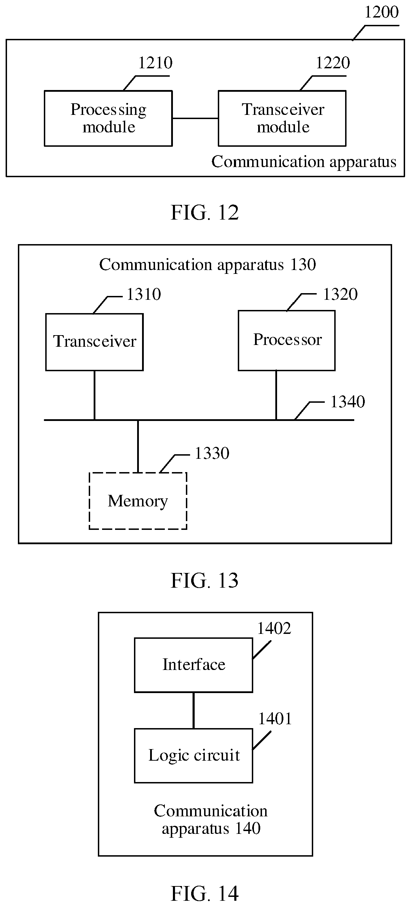

FIG. 12 is a diagram of a structure of a communication apparatus 1200. The communication apparatus 1200 may correspondingly implement functions or steps implemented by the access network device (for example, the first access network device or the second access network device) in the foregoing method embodiments, or may implement functions or steps implemented by the terminal device in the foregoing method embodiments. The communication apparatus may include a processing module 1210 and a transceiver module 1220. Optionally, a storage unit may be further included. The storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing units may be independently disposed, or may be partially or completely integrated. For example, the transceiver module 1220 may include a sending module and a receiving module.

In some possible implementations, the communication apparatus 1200 can correspondingly implement operations and functions of the first access network device in the foregoing method embodiments. For example, the communication apparatus 1200 may be the first access network device, or may be a component (for example, a chip or a circuit) used in the first access network device. For example, the transceiver module 1220 may be configured to perform all receiving or sending operations performed by the first access network device in embodiments in FIG. 5, FIG. 6, FIG. 8, and FIG. 9, for example, step 401 and step 402 in the embodiment shown in FIG. 4 and step 501, step 502, step 504, and step 505 in the embodiment shown in FIG. 5, and/or another process used to support the technology described in this specification. The processing module 1210 is configured to perform all operations performed by the first access network device in embodiments in FIG. 5, FIG. 6, FIG. 8, and FIG. 9 except the receiving and sending operations, for example, step 503 in the embodiment shown in FIG. 5.

In some possible implementations, the communication apparatus 1200 can correspondingly implement operations and functions of the second access network device in the foregoing method embodiments. For example, the communication apparatus 1200 may be the second access network device, or may be a component (for example, a chip or a circuit) used in the second access network device. For example, the transceiver module 1220 may be configured to perform all receiving or sending operations performed by the second access network device in embodiments in FIG. 7, FIG. 8, FIG. 9, FIG. 10, and FIG. 11, for example, step 601 and step 603 in the embodiment shown in FIG. 6, step 702 and step 704 in the embodiment shown in FIG. 7, and/or another process used to support the technology described in this specification. The processing module 1210 is configured to perform all operations performed by the second access network device in embodiments shown in FIG. 7, FIG. 8, FIG. 9, FIG. 10, and FIG. 11 except the sending and receiving operations, for example, step 602 in the embodiment shown in FIG. 6, and step 701 and step 703 in the embodiment shown in FIG. 7.

In some possible implementations, the communication apparatus 1200 can correspondingly implement operations and functions of the terminal device in the foregoing method embodiments. For example, the communication apparatus 1200 may be the terminal device, or may be a component (for example, a chip or a circuit) used in the terminal device. For example, the transceiver module 1220 may be configured to perform all receiving or sending operations performed by the terminal device in embodiments in FIG. 2, FIG. 3, FIG. 4, FIG. 8, and FIG. 9, for example, step 201 and step 202 in the embodiment shown in FIG. 2, step 301, step 303, step 304, and step 305 in the embodiment shown in FIG. 3, and/or another process used to support the technology described in this specification. The processing module 1210 is configured to perform all operations performed by the terminal device in embodiments shown in FIG. 2, FIG. 3, FIG. 4, FIG. 8, and FIG. 9 except the sending and receiving operations, for example, step 302 in the embodiment shown in FIG. 3, and step 402 in the embodiment shown in FIG. 4.

FIG. 13 is a diagram of a structure of another communication apparatus 130 according to an embodiment of this application. The communication apparatus in FIG. 13 may be the foregoing terminal device. The communication apparatus in FIG. 13 may be the foregoing first access network device. The communication apparatus in FIG. 13 may be the foregoing second access network device.

As shown in FIG. 13, the communication apparatus 130 includes at least one processor 1320 and a transceiver 1310.

In some other embodiments of this application, the processor 1320 and the transceiver 1310 may be configured to perform a function, an operation, or the like performed by the first access network device. For example, the processor 1320 may perform one or more of the following operations: step 503 in FIG. 5. For example, the transceiver 1310 may perform one or more of the following operations: step 401 and step 402 in FIG. 4, step 501, step 502, step 504, and step 505 in FIG. 5, step 802 and step 808 in FIG. 8, and step 902 and step 908 in FIG. 9.

In some embodiments of this application, the processor 1320 and the transceiver 1310 may be configured to perform a function, an operation, or the like performed by the second access network device. For example, the processor 1320 may perform one or more of the following operations: step 602 in FIG. 6, step 701 and step 703 in FIG. 7, and step 801, step 805, and step 807 in FIG. 8. For example, the transceiver 1310 may perform one or more of the following operations: step 601 and step 603 in FIG. 6, step 702 and step 704 in FIG. 7, step 806 in FIG. 8, and step 906 in FIG. 9.

In some embodiments of this application, the processor 1320 and the transceiver 1310 may be configured to perform a function, an operation, or the like performed by the terminal device. For example, the processor 1320 may perform one or more of the following operations: step 302 in FIG. 3, step 402 in FIG. 4, step 803 and step 809 in FIG. 8, and step 903 and step 909 in FIG. 9. The transceiver 1310 may perform one or more of the following operations: step 201 and step 202 in FIG. 2, step 301, step 303, step 304, and step 305 in FIG. 3, step 401, step 403, and step 404 in FIG. 4, step 804 and step 809 in FIG. 8, and step 904 and step 909 in FIG. 9.

The transceiver 1310 is configured to communicate with another device/apparatus through a transmission medium. The processor 1320 sends and receives data and/or signaling by using the transceiver 1310, and is configured to implement the method in the foregoing method embodiments. The processor 1320 may implement a function of the processing module 1210, and the transceiver 1310 may implement a function of the transceiver module 1220.

Optionally, the communication apparatus 130 may further include at least one memory 1330, configured to store program instructions and/or data. The memory 1330 is coupled to the processor 1320. The coupling in this embodiment of this application may be an indirect coupling or a communication connection between apparatuses, units, or modules in an electrical form, a mechanical form, or another form, and is used for information exchange between the apparatuses, the units, or the modules. The processor 1320 may cooperate with the memory 1330. The processor 1320 may execute the program instructions stored in the memory 1330. At least one of the at least one memory may be included in a processor.

A specific connection medium between the transceiver 1310, the processor 1320, and the memory 1330 is not limited in this embodiment of this application. In this embodiment of this application, in FIG. 13, the memory 1330, the processor 1320, and the transceiver 1310 are connected by a bus 1340. The bus is represented by a bold line in FIG. 13. A connection manner between other components is merely example description, and is not limited thereto. The bus may be classified into an address bus, a data bus, a control bus, and the like. For ease of representation, only one bold line is used to represent the bus in FIG. 13, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 14 is a diagram of a structure of another communication apparatus 140 according to an embodiment of this application. As shown in FIG. 14, the communication apparatus shown in FIG. 14 includes a logic circuit 1401 and an interface 1402. The processing module 1210 in FIG. 12 may be implemented by using the logic circuit 1401, and the transceiver module 1220 in FIG. 12 may be implemented by using the interface 1402. The logic circuit 1401 may be a chip, a processing circuit, an integrated circuit, a system-on-chip (system-on-chip, SoC), or the like. The interface 1402 may be a communication interface, an input/output interface, or the like. In this embodiment of this application, the logic circuit and the interface may be further coupled to each other. A specific manner of connection between the logical circuit and the interface is not limited in this embodiment of this application.

In some embodiments of this application, the logic circuit and the interface may be configured to perform a function, an operation, or the like performed by the first access network device.

In some other embodiments of this application, the logic circuit and the interface may be configured to perform a function, an operation, or the like performed by the second access network device.

In some other embodiments of this application, the logic circuit and the interface may be configured to perform a function, an operation, or the like performed by the third access network device.

In some other embodiments of this application, the logic circuit and the interface may be configured to perform a function, an operation, or the like performed by the terminal device.

In some embodiments of this application, the logic circuit and the interface may be configured to perform a function, an operation, or the like performed by the terminal device.

This application further provides a computer-readable storage medium. The computer-readable storage medium stores computer code. When the computer code runs on a computer, the computer is enabled to perform the methods in the foregoing embodiments.

This application further provides a computer program product. The computer program product includes computer code or a computer program. When the computer code or the computer program is run on a computer, the synchronization advancing methods in the foregoing embodiments are performed.

This application further provides a communication system, including a terminal device, a first access network device, and a second access network device.

This application further provides a communication system, including a terminal device, a first access network device, a second access network device, and a third access network device.

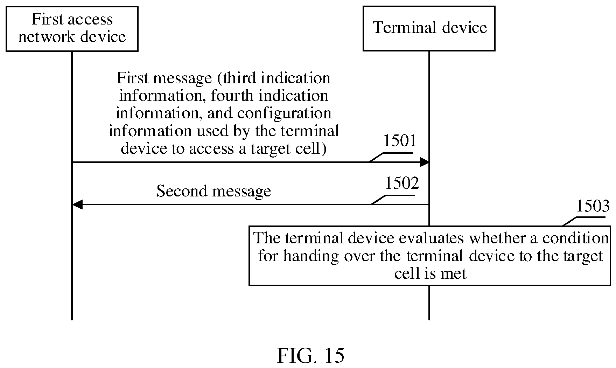

FIG. 15 is a flowchart of another synchronization advancing method according to an embodiment of this application. As shown in FIG. 15, the method includes the following steps.

1501: A first access network device sends a first message to a terminal device.

Correspondingly, the terminal device receives the first message from the first access network device. The first message includes third indication information, fourth indication information, and configuration information used by the terminal device to access a target cell. The third indication information indicates a condition for handing over the terminal device to the target cell. The condition may be considered as a condition for handing over the terminal device from a currently accessed cell to the target cell. The condition may be that a measurement event is met, a piece of signaling is received, or the like. The target cell is not the cell currently accessed by the terminal device. The first access network device is an access network device that provides a service for the cell currently accessed by the terminal device. The fourth indication information indicates a TA of the terminal device in the target cell.

In a possible implementation, the condition includes one or more of the following: signal quality that is of the cell currently accessed by the terminal device and that is measured by the terminal device is less than a first threshold; and signal quality that is of the target cell and that is measured by the terminal device is greater than or equal to a second threshold. The first threshold and the second threshold may be configured based on an actual requirement. This is not limited herein. The terminal device may properly determine, based on the condition, whether the terminal device needs to be handed over from the currently accessed cell to the target cell.

In a possible implementation, before sending the first message to the terminal device, the first access network device sends first indication information and second indication information to the terminal device. The first indication information indicates the terminal device to perform a synchronization-related operation, and the second indication information indicates a time-frequency resource available for the terminal device to send an uplink signal to the target cell. The terminal device may detect a synchronization signal of the target cell based on the first indication information, to complete downlink synchronization. The terminal device may send a first uplink signal to the target cell based on the second indication information. The first uplink signal is used to determine the TA of the terminal device in the target cell. In this implementation, the synchronization signal of the target cell is detected to complete the downlink synchronization, so that the downlink synchronization with the target cell can be completed before a handover to the target cell is performed. The first uplink signal is sent to the target cell, so that the TA of the terminal device in the target cell is obtained before the handover to the target cell is performed.

1502: The terminal device replies a second message to the first access network device.

The second message indicates that the terminal device has received the first message. In other words, the second message indicates that the terminal device has completed configuration of the target cell, for example, the TA of the terminal device in the target cell is configured, and evaluation of a condition for determining whether target cell handover is performed is evaluated is configured.

1503: The terminal device evaluates whether a condition for handing over the terminal device to the target cell is met.

For example, the condition is that a measurement event is met. After receiving the first message, the terminal device may perform measurement based on a pre-determined measurement event. For another example, the condition is that one piece of signaling is received. After receiving the first message, the terminal device may attempt/prepare to receive corresponding signaling.

If the condition for handing over the terminal device to the target cell is met, the terminal device performs cell handover based on the configuration information of the target cell and the TA of the terminal device in the target cell.

The configuration information of the target cell is configuration information used by the terminal device to access the target cell. In a possible implementation, after completing the configuration of the target cell, the terminal device replies an RRCReconfigurationComplete message to the target cell. The RRCReconfigurationComplete message indicates that the terminal device has completed cell handover.

In a possible implementation, a case in which the condition for handing over the terminal device to the target cell is met includes: receiving information indicating that the condition is met. For example, the terminal device receives, from the first access network device, information indicating that the condition is met.

In this embodiment of this application, before performing cell handover, the terminal device receives the first message from the first access network device. Before handover, the terminal may obtain the configuration of the target cell and uplink and downlink synchronization in advance, and the condition for handing over the terminal device to the target cell is configured. When the terminal device needs to be handed over, a network does not need to send handover signaling to the terminal for triggering. In addition, cell handover may be performed based on the configuration information of the target cell and the TA of the terminal device in the target cell, and no time is needed to obtain the TA of the terminal device in the target cell. This can further reduce a cell handover delay.

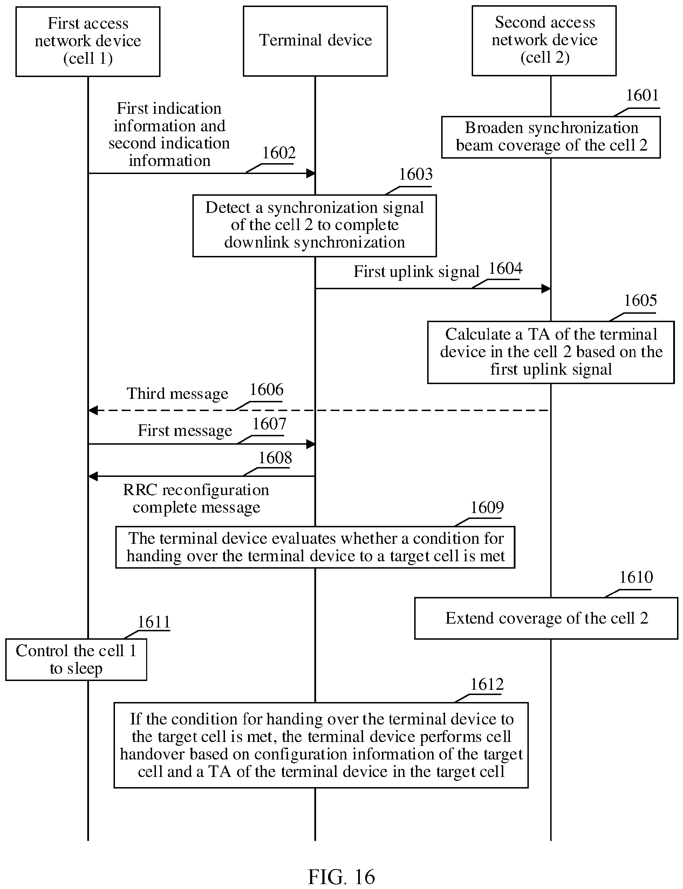

FIG. 16 is a flowchart of a cell handover method according to an embodiment of this application. FIG. 1A is an example of a cell handover scenario to which a method procedure in FIG. 16 is applicable. The example of the cell handover scenario to which the method procedure in FIG. 16 is applicable is as follows: Both a cell 1 and a cell 2 are in a normal running mode (namely, a normal working state), a terminal device has accessed the cell 1, the cell 1 is to sleep, and the cell 2 is to be broadened. Therefore, the terminal device needs to perform cell handover and is handed over from the cell 1 to the cell 2 (a broadened cell 2). In this embodiment of this application, an entity corresponding to the cell 1 is a first access network device, and an operation performed by the first access network device may be understood as an operation performed by the cell 1. An entity corresponding to the cell 2 is a second access network device, and an operation performed by the second access network device may be understood as an operation performed by the cell 2. The cell 2 may be considered as an example of the foregoing target cell. As shown in FIG. 16, the method procedure may include the following steps.

1601: The second access network device broadens synchronization beam coverage of the cell 2.

For step 1602, refer to step 801.

1602: The first access network device sends first indication information and second indication information to the terminal device.

For step 1602, refer to step 501. In a possible implementation, the first access network device sends the first indication information to the terminal device after the cell 2 (namely, the target cell) completes broadening of the synchronization beam coverage, so that the terminal device completes downlink synchronization with the cell 2 more quickly.

1603: The terminal device detects a synchronization signal of the cell 2 to complete the downlink synchronization.

For step 1603, refer to step 302. The terminal device detects the synchronization signal of the cell 2 based on the first indication information, to complete the downlink synchronization.

1604: The terminal device sends a first uplink signal to the cell 2 based on the second indication information.

For step 1604, refer to step 303.

1605: The second access network device calculates a TA of the terminal device in the cell 2 based on the first uplink signal.

1606: The second access network device sends a third message to the first access network device.

The third message may include the TA of the terminal device in the cell 2 and configuration information used by the terminal device to access the cell 1.

Step 1606 is optional. When the second access network device and the first access network device are different entities, that is, when the cell 2 and the cell 1 are not co-sited, the second access network device performs step 1606 after performing step 1605, so that the first access network device obtains, based on the third message, the TA of the terminal device in the cell 2 and the configuration information used by the terminal device to access the cell 2.

When the second access network device and the first access network device are a same entity, that is, when the cell 2 and the cell 1 are co-sited, the second access network device calculates the TA of the terminal device in the cell 2, that is, the first access network device calculates the TA of the terminal device in the cell 2. Therefore, step 1606 does not need to be performed.

1607: The first access network device sends a first message to the terminal device.

Correspondingly, the terminal device receives the first message from the first access network device. For step 1607, refer to step 1501.

1608: The terminal device sends a second message to the first access network device.

The second message indicates that the terminal device has received the first message. In other words, the second message indicates that the terminal device has completed configuration of the target cell, for example, a TA of the terminal device in the target cell is configured. Optionally, after receiving the first message, the terminal device starts to evaluate whether a condition for handing over the terminal device to the target cell is met. For example, the condition is that a measurement event is met. After receiving the first message, the terminal device may perform measurement based on a pre-determined measurement event. For another example, the condition is that one piece of signaling is received. After receiving the first message, the terminal device may attempt/prepare to receive corresponding signaling.

1609: The terminal device evaluates whether a condition for handing over the terminal device to the target cell is met.

For step 1609, refer to step 1503.

In a possible implementation, if the condition is receiving of signaling, the cell 1 (before sleeping)/the cell 2 (after being broadened) sends, to the terminal device, one piece of signaling indicating that the terminal device meets the condition. In other words, before the cell 1 sleeps, the first access network device may send, to the terminal device, one piece of signaling indicating that the terminal device meets the condition. Alternatively, after completing coverage broadening of the cell 2, the second access network device may send, to the terminal device, one piece of signaling indicating that the terminal device meets the condition.

In a possible implementation, if the condition is that a measurement event is met, coverage changes of the cell 1 and the cell 2 cause a change of a cell measurement result, so that the measurement event is met.

1610: The second access network device extends coverage of the cell 2.

1611: The first access network device controls the cell 1 to sleep.

A sequence of step 1610 and step 1611 is not limited.

In a possible implementation, after completing coverage broadening of the cell 2, the first access network device controls the cell 1 to sleep. In this way, a case in which the terminal device that accesses the cell 1 cannot access the cell 2 in time can be avoided.

1612: If the condition for handing over the terminal device to the target cell is met, the terminal device performs cell handover based on configuration information of a target cell and a TA of the terminal device in the target cell.

In a possible implementation, after the terminal device is handed over to the cell 2 (namely, the target cell), the terminal device replies an RRCReconfigurationComplete message to the cell 2. The RRCReconfigurationComplete message indicates that the terminal device has completed cell handover.

In this embodiment of this application, before performing cell handover, the terminal device receives the first message from the first access network device. Before handover, the terminal device may obtain the configuration of the target cell and uplink and downlink synchronization in advance, and the condition for handing over the terminal device to the target cell is configured. When the terminal device needs to be handed over, a network does not need to send handover signaling to the terminal for triggering. In addition, cell handover may be performed based on the configuration information of the target cell and the TA of the terminal device in the target cell, and no time is needed to obtain the TA of the terminal device in the target cell. This can further reduce a cell handover delay. In addition, before the cell 2 completes coverage extension, the terminal device detects the synchronization signal of the cell 2 to complete the downlink synchronization, and may implement the downlink synchronization before being handed over to the cell 2. It can be learned that, in a cell handover process, the synchronization advancing method provided in this embodiment of this application is used, so that a cell handover delay of a cell is further reduced, a period of time in which coverage of an original cell (namely, the cell 1) overlaps with coverage of a target cell (the cell 2) is reduced, and user experience is improved. In addition, a speed at which the cell 1 enters a sleep state is accelerated, and an energy saving effect is improved.

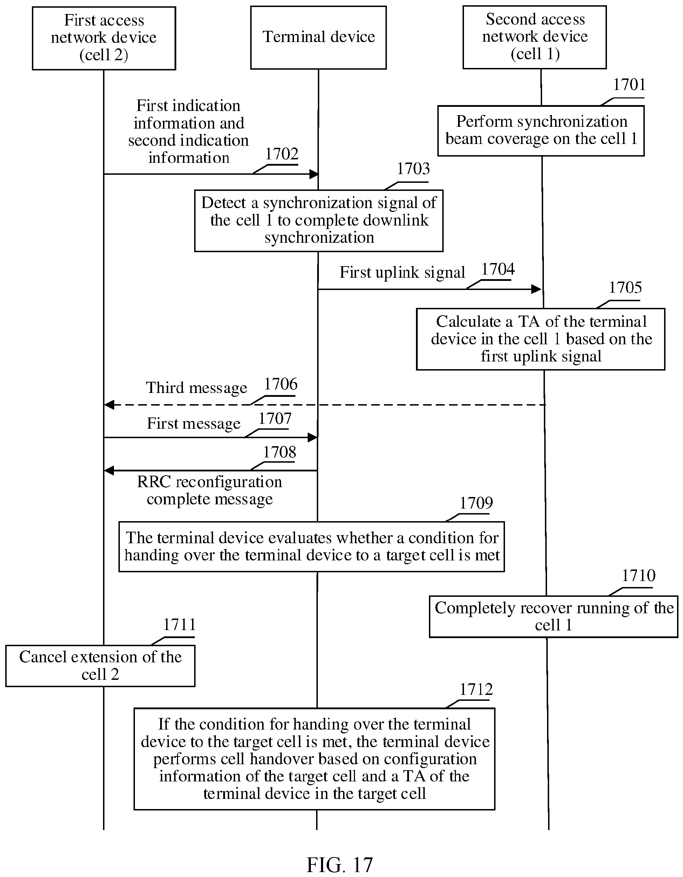

The following describes, with reference to a cell handover scenario when a cell is recovered, application of the synchronization advancing method provided in embodiments of this application to cell handover. FIG. 17 is a flowchart of another cell handover method according to an embodiment of this application. FIG. lA is an example of a cell handover scenario to which a method procedure in FIG. 17 is applicable. The example of the cell handover scenario to which the method procedure in FIG. 17 is applicable is as follows: A cell 2 is in the extended coverage state (where the cell 2 may be considered as an extended cell 2), a cell 1 is in the sleep state, a terminal device has accessed the cell 2, the cell 2 is to be recovered (extension is canceled), and running of the cell 1 is to be recovered. That the cell 2 is to be recovered may be understood as that the cell 2 is to be adjusted from the extended coverage state to the normal working state. That running of the cell 1 is to be recovered may be understood as that the cell 1 is to be adjusted from the sleep state to the normal working state. Therefore, the terminal device needs to perform cell handover and is handed over from the cell 2 to the cell 1 (the cell 1 whose running is recovered). In this embodiment of this application, an entity corresponding to the cell 2 is a first access network device, and an operation performed by the first access network device may be understood as an operation performed by the cell 2. An entity corresponding to the cell 1 is a second access network device, and an operation performed by the second access network device may be understood as an operation performed by the cell 1. The cell 1 may be considered as an example of the foregoing target cell. As shown in FIG. 17, the method procedure may include the following steps.

1701: The second access network device performs synchronization beam coverage on the cell 1.

A possible implementation of step 1701 is as follows: The second access network device periodically sends a synchronization beam within coverage of the cell 1.

1702: The first access network device sends first indication information and second indication information to the terminal device.

For step 1702, refer to step 501.

1703: The terminal device detects a synchronization signal of the cell 1 to complete downlink synchronization.

For step 1703, refer to step 302.

1704: The terminal device sends a first uplink signal to the cell 1 based on the second indication information.

For step 1704, refer to step 303.

1705: The second access network device calculates a TA of the terminal device in the cell 1 based on the first uplink signal.

1706: The second access network device sends a third message to the first access network device.

The third message may include the TA of the terminal device in the cell 1 and configuration information used by the terminal device to access the cell 1.

Step 1706 is optional. When the second access network device and the first access network device are different entities, that is, when the cell 2 and the cell 1 are not co-sited, the second access network device performs step 1706 after performing step 1705, so that the first access network device obtains, based on the third message, the TA of the terminal device in the cell 1 and the configuration information used by the terminal device to access the cell 1.

When the second access network device and the first access network device are a same entity, that is, when the cell 2 and the cell 1 are co-sited, the second access network device calculates the TA of the terminal device in the cell 1, that is, the first access network device calculates the TA of the terminal device in the cell 1. Therefore, step 1706 does not need to be performed.

1707: The first access network device sends a first message to the terminal device.

For step 1707, refer to step 1501.

1708: The terminal device sends a second message to the first access network device.

For step 1708, refer to step 1608.

1709: The terminal device evaluates whether a condition for handing over the terminal device to the target cell is met.

For step 1709, refer to step 1503.

In a possible implementation, if the condition is receiving of signaling, the cell 1 (after restarting is recovered)/the cell 2 (before being recovered) sends, to the terminal device, one piece of signaling indicating that the terminal device meets the condition. In other words, after restarting of the cell 1 is recovered (that is, running of the cell 1 is completely recovered), the second access network device may send, to the terminal device, one piece of signaling indicating that the terminal device meets the condition. Alternatively, before extension of the cell 2 is canceled (that is, before the cell 2 is recovered), the first access network device may send, to the terminal device, one piece of signaling indicating that the terminal device meets the condition.

In a possible implementation, if the condition is that a measurement event is met, coverage changes of the cell 1 and the cell 2 cause a change of a cell measurement result, so that the measurement event is met.

1710: The second access network device completely recovers running of the cell 1.

For step 1710, refer to step 907.

1711: The first access network device cancels extension of the cell 2.

For step 1711, refer to step 910. A sequence of step 1710 and step 1711 is not limited.

In a possible implementation, after running of the cell 1 is completely recovered, the first access network device cancels extension of the cell 2.

1712: If the condition for handing over the terminal device to the target cell is met, the terminal device performs cell handover based on configuration information of a target cell and a TA of the terminal device in the target cell.

In a possible implementation, after the terminal device is handed over to the cell 1 (namely, the target cell), the terminal device replies an RRCReconfigurationComplete message to the cell 1. The RRCReconfigurationComplete message indicates that the terminal device has completed cell handover.

In this embodiment of this application, before performing cell handover, the terminal device receives the first message from the first access network device. Before handover, the terminal device may obtain the configuration of the target cell and uplink and downlink synchronization in advance, and the condition for handing over the terminal device to the target cell is configured. When the terminal device needs to be handed over, a network does not need to send handover signaling to the terminal for triggering. In addition, cell handover may be performed based on the configuration information of the target cell and the TA of the terminal device in the target cell, and no time is needed to obtain the TA of the terminal device in the target cell. This can further reduce a cell handover delay. In addition, before running of the cell 1 is completely recovered, the terminal device detects the synchronization signal of the cell 1 to complete the downlink synchronization, and may implement the downlink synchronization before being handed over to the cell 1. It can be learned that, in a cell handover process, the synchronization advancing method provided in this embodiment of this application is used, so that a cell handover delay of a cell is reduced, a period of time in which coverage of an original cell (namely, the cell 2) overlaps with coverage of a target cell (the cell 1) is reduced, and user experience is improved. In addition, a speed at which the cell 1 is recovered from sleeping is accelerated, and impact of cell sleeping on user experience is reduced. With reference to the method procedures in FIG. 16 and FIG. 17, it can be learned that the synchronization advancing method provided in embodiments of this application can reduce a period of time in which coverage of an original cell overlaps with coverage of a target cell, and improve an energy saving effect.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A synchronization advancing method, comprising:
receiving, by a terminal device, a first message from a first access network device, wherein the first message is used by the terminal device to obtain a timing advance TA of the terminal device in a target cell, and the target cell is not a cell currently accessed by the terminal device; and
sending, by the terminal device, a second message to the first access network device, wherein the second message indicates that the terminal device has completed configuration of the target cell.

2. The method according to claim 1, wherein the first message is a radio resource control RRC reconfiguration message, and the second message is an RRC reconfiguration complete message.

3. The method according to claim 1 or 2, wherein the first message comprises the TA of the terminal device in the target cell and/or configuration information of the target cell.

4. The method according to any one of claims 1 to 3, wherein before the receiving, by a terminal device, a first message from a first access network device, the method further comprises:
receiving, by the terminal device, first indication information and second indication information from the first access network device, wherein the first indication information indicates the terminal device to perform a synchronization-related operation, and the second indication information indicates a time-frequency resource available for the terminal device to send an uplink signal to the target cell.

5. The method according to claim 4, wherein before the terminal device receives the first indication information, the target cell has completed synchronization beam coverage.

6. The method according to claim 5, wherein after the receiving, by the terminal device, first indication information and second indication information from the first access network device, and before the receiving, by a terminal device, a first message from a first access network device, the method further comprises:
detecting, by the terminal device, a synchronization signal of the target cell to complete downlink synchronization; and
sending, by the terminal device, a first uplink signal to the target cell based on the second indication information, wherein the first uplink signal is used to determine the TA of the terminal device in the target cell.

7. The method according to any one of claims 1 to 6, wherein the first message further comprises third indication information, and the third indication information indicates a condition for handing over the terminal device to the target cell.

8. The method according to claim 7, wherein the method further comprises:
evaluating, by the terminal, the condition; and
when the condition is met, performing, by the terminal device, cell handover based on the TA of the terminal device in the target cell.

9. The method according to claim 7 or 8, wherein the condition comprises one or more of the following: signal quality that is of the cell currently accessed by the terminal device and that is measured by the terminal device is less than a first threshold; and signal quality that is of the target cell and that is measured by the terminal device is greater than or equal to a second threshold.

10. The method according to claim 7 or 8, wherein a case in which the condition is met comprises: receiving information indicating that the condition is met.

11. A synchronization advancing method, comprising:
sending, by a first access network device, a first message to a terminal device, wherein the first message is used by the terminal device to obtain a TA of the terminal device in a target cell, and the target cell is not a cell currently accessed by the terminal device; and
receiving, by the first access network device, a second message from the terminal device, wherein the second message indicates that the terminal device has completed configuration of the target cell.

12. The method according to claim 11, wherein the first message is a radio resource control RRC reconfiguration message, and the second message is an RRC reconfiguration complete message.

13. The method according to claim 11 or 12, wherein the first message comprises the TA of the terminal device in the target cell and/or configuration information of the target cell.

14. The method according to any one of claims 11 to 13, wherein before the sending, by a first access network device, a first message to a terminal device, the method further comprises:
sending, by the first access network device, first indication information and second indication information to the terminal device, wherein the first indication information indicates the terminal device to perform a synchronization-related operation, and the second indication information indicates a time-frequency resource available for the terminal device to send an uplink signal to the target cell.

15. The method according to claim 14, wherein the sending, by the first access network device, first indication information to the terminal device comprises:
after the target cell has completed synchronization beam coverage, sending, by the first access network device, the first indication information to the terminal device.

16. The method according to claim 14, wherein after the sending, by the first access network device, first indication information and second indication information to the terminal device, and before the sending, by a first access network device, a first message to a terminal device, the method further comprises:
receiving, by the first access network device, a first uplink signal from the terminal device, wherein the first uplink signal is used to obtain the TA of the terminal device in the target cell, and the first access network device is an entity corresponding to the target cell; or
receiving, by the first access network device, a third message from a second access network device, wherein the third message comprises the TA of the terminal device in the target cell, the second access network device is an entity corresponding to the target cell, and the first access network device and the second access network device are different entities.

17. The method according to any one of claims 11 to 16, wherein the first message comprises third indication information, and the third indication information indicates a condition for handing over the terminal device to the target cell.

18. The method according to claim 17, wherein after the sending a first message to a terminal device, the method further comprises:
before the cell currently accessed by the terminal device sleeps or recovers coverage, sending, to the terminal device, information indicating that the condition is met.

19. A synchronization advancing method, comprising:
sending, by a second access network device, a third message to a first access network device, wherein the third message is used by the first access network device to obtain a TA of a terminal device in a target cell, the target cell is not a cell currently accessed by the terminal device, the second access network device is an entity corresponding to the target cell, and the first access network device is an entity corresponding to the cell currently accessed by the terminal device.

20. The method according to claim 19, wherein before the sending, by a second access network device, a third message to a first access network device, the method further comprises:
receiving, by the second access network device, a first uplink signal from the terminal device; and
determining, by the second access network device, the TA of the terminal device in the target cell based on the first uplink signal.

21. The method according to claim 19 or 20, wherein the third message comprises the TA of the terminal device in the target cell and/or configuration information of the target cell.

22. The method according to any one of claims 19 to 21, wherein the method further comprises:
broadening partial or entire beam coverage of the target cell; and
after the beam coverage of the target cell is broadened, sending, to the terminal device, information indicating that the terminal device meets a condition for handing over the terminal device to the target cell.

23. The method according to any one of claims 19 to 21, wherein the method further comprises:
after running of the target cell is completely recovered, sending, to the terminal device, information indicating that the terminal device meets a condition for handing over the terminal device to the target cell.

24. A communication apparatus, comprising:
a transceiver module, configured to receive a first message from a first access network device, wherein the first message is used by a terminal device to obtain a TA of the terminal device in a target cell, and the target cell is not a cell currently accessed by the terminal device, wherein
the transceiver module is further configured to send a second message to the first access network device, wherein the second message indicates that the terminal device has completed configuration of the target cell.

25. A communication apparatus, comprising:
a transceiver module, configured to send a first message to a terminal device, wherein the first message is used by the terminal device to obtain a TA of the terminal device in a target cell, and the target cell is not a cell currently accessed by the terminal device, wherein
the transceiver module is further configured to receive a second message from the terminal device, wherein the second message indicates that the terminal device has completed configuration of the target cell.

26. A communication apparatus, comprising:
a processing module, configured to send a third message to a first access network device, wherein the third message is used by the first access network device to obtain a TA of a terminal device in a target cell, the target cell is not a cell currently accessed by the terminal device, a second access network device is an entity corresponding to the target cell, and the first access network device is an entity corresponding to the cell currently accessed by the terminal device.

27. A computer-readable storage medium, wherein the computer-readable storage medium stores a computer program, the computer program comprises program instructions, and when the program instructions are executed by a processor, the processor is enabled to perform the method according to any one of claims 1 to 23.
